# EUROPÄISCHE PATENTSCHRIFT

(11) **EP 3 649 868 B1**
(45) Veröffentlichungstag und Bekanntmachung des Hinweises auf die Patenterteilung: **08.09.2021**
(21) Anmeldenummer: 18204936.1
(22) Anmeldetag: 07.11.2018
(51) Int. Cl.: A23J 3/22, A23C 20/02, A23P 10/25, A23P 30/10

(54) **VERFAHREN ZUM HERSTELLEN EINES SCHNITTFESTEN LEBENSMITTELGELKÖRPERS AUS PFLANZLICHEN PROTEINEN, LEBENSMITTELGELKÖRPER**
METHOD FOR PRODUCING A CUT-RESISTANT FOOD GEL BODY MADE FROM VEGETABLE PROTEINS, FOOD GEL BODY
PROCÉDÉ DE FABRICATION D'UN CORPS GÉLIFIÉ DE DENRÉE ALIMENTAIRE DE CONSISTANCE FERME À PARTIR DES PROTÉINES DE PLANTES, CORPS GÉLIFIÉ DE DENRÉE ALIMENTAIRE

(43) Veröffentlichungstag der Anmeldung: 13.05.2020
(73) Patentinhaber: Hochland SE, 88178 Heimenkirch (DE)
(72) Erfinder: Kuhn, Klaus, 83646 Bad Tölz (DE); Dold, Jasmin, 85354 Freising (DE); Herrmann-Bürk, Dirk Michael, 88279 Amtzell (DE)
(74) Vertreter: Patent- und Rechtsanwälte Behrmann Wagner PartG mbB

(56) Entgegenhaltungen:
- CH-A5- 684 923
- GB-A- 1 300 711
- GB-A- 2 016 255
- US-A- 5 225 233
- US-A1- 2017 105 438
- BAINY EDUARDA M ET AL: "Assessment of the effects of soy protein isolates with different protein compositions on gluten thermosetting gelation", FOOD RESEARCH INTERNATIONAL, Bd. 43, Nr. 6, Juli 2010 (2010-07), Seiten 1684-1691, XP002790567, ISSN: 0963-9969
- JEREZ ET AL: "Egg white-based bioplastics developed by thermomechanical processing", JOURNAL OF FOOD ENGINEERING, BARKING, ESSEX, GB, Bd. 82, Nr. 4, 14. Mai 2007 (2007-05-14), Seiten 608-617, XP022077937, ISSN: 0260-8774, DOI: 10.1016/J.JFOODENG.2007.03.020
- Anonymous ET AL: "Thermal Analysis Application No. HB 1002 Application published in METTLER TOLEDO TA Application Handbook Food Thermal Analysis Application Denaturation of Vegetable Proteins", , 1 December 2009 (2009-12-01), XP055712438, Retrieved from the Internet: URL:https://www.mt.com/dam/Analytical/Matc harApps/hb1002.pdf [retrieved on 2020-07-07]
- Rami M Saeed ET AL: "Uncertainty of Thermal Characterization of Phase Change Material by Differential Scanning Calorimetry Analysis", International Journal of Engineering Research & Technology (IJERT), 1 January 2016 (2016-01-01), pages 405-412, XP055729344, Retrieved from the Internet: URL:https://www.ijert.org/research/uncerta inty-of-thermal-characterization-of-phase- change-material-by-differential-scanning-c alorimetry-analysis-IJERTV5IS010381.pdf [retrieved on 2020-09-10]
- Jasim Ahmed ET AL: "Dynamic Viscoelastic Behavior of High Pressure Treated Soybean Protein Isolate Dispersions", INTERNATIONAL JOURNAL OF FOOD PROPERTIES, vol. 10, no. 2, 25 April 2007 (2007-04-25) , pages 397-411, XP055712458, US ISSN: 1094-2912, DOI: 10.1080/10942910601045313
- Anonymous: "Bohlin Gemini", , 1 January 2005 (2005-01-01), XP055729305, Retrieved from the Internet: URL:https://www.pro-4-pro.com/media/produc t/9180/attachment_en-1398243337.pdf [retrieved on 2020-09-09]
- Anonymous: "TU Berlin Rheologie Lehre Oszillation", , 13 May 2009 (2009-05-13), XP055729308, Retrieved from the Internet: URL:https://www.lmr.tu-berlin.de/fileadmin /fg78/Demoversuche/oszillation/oszillation .html [retrieved on 2020-09-09]
- Thomas Metzger: "Das Rheologie Handbuch 2. überarbeitete Auflage" In: "Das Rheologie Handbuch 2. überarbeitete Auflage", 1 January 2007 (2007-01-01), XP055762449, pages 130-137,
- Sundaram Gunasekaran ET AL: "5. Linear Viscoelasticity of Cheese" In: "Cheese Rheology and Texture", 1 January 2002 (2002-01-01), CRC Press, XP055762454, pages 215,226,227,232, 258-261,

## Beschreibung

Die Erfindung betrifft ein Verfahren gemäß Anspruch 1 zum Herstellen eines schnittfesten, insbesondere veganen, Lebensmittelgelkörpers, vorzugsweise eines Lebensmittel-Gelblocks, auf der Basis von pflanzlichen Proteinen. Der Lebensmittelgelkörper zeichnet sich durch eine kontinuierliche Phase aus miteinander aggregierten, d.h. dreidimensional vernetzten Pflanzenproteinen und Wasser aus, also durch eine dreidimensionale Pflanzenproteinmatrix. Des Weiteren betrifft die Erfindung einen elastischen und schnittfesten, bevorzugt veganen, Lebensmittelgelkörper, vorzugsweise Lebensmittel-Gelblock gemäß Anspruch 13, insbesondere als Ergebnis des erfindungsgemäßen Verfahrens.

Bisher auf dem Markt erhältliche, schnittfeste vegane Lebensmittelgelkörper, beispielsweise in Form von Käseersatzscheiben werden auf Basis von Stärkegelen hergestellt. Hierbei kommen auch Hydrokolloide zur Anwendung. Die bekannten Stärkegelkörper zeichnen sich durch einen geringen Proteingehalt aus. Möchte man alternative Produkte mit hohem Proteingehalt herstellen, erkennt man, dass der Zusatz von pflanzlichen Proteinen zu einer Kohlenhydrat- bzw. Stärkematrix aufgrund einer eingeschränkten Mischbarkeit begrenzt ist, wenn das Produkt weiterhin ein elastisches Gelsystem sein soll. Höhere Anteile von pflanzlichen Proteinen führen nämlich zu einer Zerstörung des elastischen Stärkegels, woraus eine eher breiige und somit unelastische und nicht mehr schnittfeste Masse resultiert. In der Praxis werden daher lediglich geringe Mengen pflanzlicher Proteine (etwa 1 bis 2 Gew.-%) dem Kohlenhydrat-Gelsystem zugesetzt. Schnittfeste vegane, hochelastische Wurstersatzwaren ohne den Zusatz von technischen Hilfsstoffen wie Transglutaminase oder Hydrokolloiden, sind bisher im Einzenhandel nicht erhältlich. Bei vegetarischen Alternativen basiert das Gelsystem im Allgemeinen auf der Koagulation von Hühnereiweiß, da Hühnereiweiß-Gele vergleichsweise unempfindlich sind gegenüber Zusätzen jeglicher Art.

Es besteht daher Bedarf an einem Lebensmittelgelkörper sowie an einem Verfahren zu dessen Herstellung, der sich durch einen hohen Pflanzenproteingehalt auszeichnet und der darüber hinaus als elastisches Gelsystem ausgebildet ist.

Extraktionsverfahren zur Gewinnung und Aufkonzentrierung von Pflanzenproteinen sind vielfältig in der wissenschaftlichen Literatur sowie in der Patentliteratur beschrieben, bei denen die Funktionalität der Proteine erhalten bleibt.

So wurde zum Belspiel in: "Ultracentrifugal and Polyacrylamide Gel Electrophoretic Studies of Extractability and Stability of Almond Meal Proteins" von Wolf & Sathe 1998 die Extraktion von Mandelproteinen bei unterschiedlichen Bedingungen weitreichend beschrieben.

In der GB 1 318 596 A1 sind beispielsweise Extraktionsverfahren für Sojabohnen und Erdnussprotein beschrieben. Ferner offenbart die Druckschrift neben einem kontinuierlichen Koagulierungs-Verfahren ein Batch-Kompaktierverfahren, bei welchem Sojaproteine unter Zusatz von Stärke in einer Form unter Dampfathmosphäre erhitzt und dann abgekühlt werden. Die Druckschrift offenbart das Erhitzen unter Gegendruck.

Die GB 2 016 255 A beschreibt ein Verfahren, bei dem Pflanzenproteeine unter Zusatz von Stärke in Dampfatmosphäre in einer Form erhitzt und dadurch koaguliert werden.

Die US 2017/0105438 A1 beschreibt ein Extrusionsverfahren zur Herstellung von Proteinkörpern als Fleischersatzstoffe.

Die US 5,225,233 A offenbart ein kompaktiertes Lebensmittelprodukt aus texturierten, gequollenen Sojaproteinen, das einer Hühnerbrust ähnelt.

Die DE 10 2014 005 466 A1 beschreibt die Gewinnung von Rapsprotein.

Die Extraktion von Haferprotein ist beispielsweise in der US 2016/030 9762 A1 beschrieben.

Die US 2017/023 8590 A1 beschreibt Verfahren zur Extraktion von Mungbohnenprotein zur Herstellung von Rühreiersatz.

Darüber hinaus existieren eine Vielzahl weiterer Quellen für pflanzenprotein-spezifische Extraktionsverfahren, bei denen die Proteinfunktionalität erhalten bleibt. In der industriellen Praxis werden die Extrakte in der Regel jedoch im Rahmen eines Sprühtrocknungsschrittes getrocknet, welcher zur Denaturierung der Proteine führt.

In der EP 2 984 936 A1 ist die Gewinnung eines gelierfähigen Mungbohnenproteinkonzentrats beschrieben.

Ausgehend von dem vorgenannten Stand der Technik, liegt der Erfindung die Aufgabe zugrunde, ein Verfahren zur Herstellung eines elastischen, insbesondere veganen, schnittfesten Lebensmittelgelkörpers auf Basis von Pflanzenproteinen anzugeben.

Diese Aufgabe wird hinsichtlich des Verfahrens mit den Merkmalen des Anspruchs 1, hinsichtlich des Lebensmittelgelkörpers mit den Merkmalen des Anspruchs 13 gelöst.

Der Erfindung liegt der Gedanke zugrunde, einen, insbesondere veganen, schnittfesten Lebensmittetgelkörper aus geeigneten Pflanzenproteinen, wie beispielsweise Mandelproteinen, Cashewproteinen, Mungbohnenproteinen, Kokosproteinen, Kichererbsenproteinen, Erdnussproteinen, Haferproteinen, etc. herzustellen bzw. anzugeben, der sich dadurch auszeichnet, dass die Pflanzenproteine das gelartigelastische Netzwerk ausbilden, d.h. die kontinuierliche Phase des Lebensmittelgelkörpers darstellen. Andere, fakultative Zusätze (bezogen auf das Gelnetzwerk auch Störgrößen bezeichenbar) wie Fett, Zucker, Salz, geschmacksgebende Zutaten, wie z.B. Kräuter, Farb- und/oder Aromastoffe dienen, falls zugesetzt, als Füllstoffe innerhalb dieser kontinuierlichen Phase und/oder als Geschmacksträger. Die erhaltenen Lebensmittelgelkörper, insbesondere in Form von Gelblöcken, können als Käse- oder Fleisch- bzw. Wurstwarenersatzlebensmittel dienen. Die Weiterverarbeitung zu Blöcken, Scheiben, Raspeln (shreds), Würfel, Stiften, etc. ist ohne Weiteres möglich und ist hiermit als Weiterbildung der Erfindung bzw. bevorzugte Ausführungsform offenbart.

Ausgangsbasis für das erfindungsgemäße Verfahren zur Herstellung des Lebensmittelgelkörpers ist eine wässrige Pflanzenproteinkonzentratlösung, wobei sich die darin enthaltenen Pflanzenproteine durch eine hohe, insbesondere eine vollständige, Funktionalität auszeichnen. Dieses native Verhalten wird im Rahmen des erfindungsgemäßen Verfahrens benötigt, um die Proteine zu aggregieren, d.h. dreidimensional zu einem Pflanzenproteingelsystem zu vernetzen.

Zum Erhalten einer für das erfindungsgemäße Verfahren geeigneten Pflanzenproteinkonzentratlösung, d.h. zur Extraktion und Aufkonzentration von Pflanzenproteinen kann auf an sich bekannte Verfahren zurückgegriffen werden, die bevorzugt auf die jeweilige Proteinsorte bzw. Rohstoffquelle optimal angepasst sind.

Allgemein ist es bevorzugt, die pflanzlichen Rohstoffe, wie beispielsweise Mandel, Erdnuss, Kokosnuss oder Kichererbse, Erbse oder Bohne, etc. einer Vorbehandlung zu unterziehen. Ölhaltige Samen können beispielsweise durch Auspressen In einer Ölpresse weitestgehend vom Öl befreit werden, insbesondere bis ein Restölgehalt zwischen 10 und 12 Gew.-% verbleibt, woraufhin die ausgepressten Samen bzw. der Presskuchen vermahlen werden können/kann. Der Presskuchen sowie das Mehl daraus sind ein idealer Ausgangsstoff für die Extraktion von Proteinen. Stärkehaltige Samen, wie beispielsweise Leguminosen können entweder eingeweicht oder direkt vermahlen und dann der Extraktion zugeführt werden. Sämtliche dieser Vorbereitungsschritte sind dem Fachmann bekannt.

Die Extraktion verläuft bevorzugt nach folgendem Grundschema: Der, insbesondere vormehlene, pflanzliche Rohstoff wird in einer Verdünnung von insbesondere 1:4 bis 1:10 mit Wasser vermengt. Je nach Rohstoff wird der pH-Wert des Wassers auf einen Wert zwischen 5,8 und 9.6. In Abhängigkeit des Rohstoffs, eingestellt. Der NaCl-Gehalt liegt im Allgemeinen zwischen 0 Mol/l und 2 Mol/l. Während der Extraktion wird bevorzugt in Abhängigkeit des Rohstoffs eine Temperatur zwischen 10° Celsius und 50° Celsius gehalten, wobei die Jeweilige Suspension minimal zwischen 1 und 5 Stunden gerührt wird. Hierbei lösen sich die Proteine aus dem Rohstoff und befinden sich danach in gelöstem Zustand in der Lösung. Vorzugsweise folgt daraufhin ein Filtrationsschritt und in vielen Fällen eine Zentrifugation der filtrierten Suspension um unerwünschte Festkörperbestandtelte abzutrennen. Der Überstand wird weiter verarbeitet.

In den meisten Fällen wird vorzugsweise eine pH-gesteuerte Ausfällung der Proteine herbeigeführt, insbesondere bei pH-Werten zwischen 4,5 und 5,6. Zur Abtrennung der Proteine erfolgt eine Zentrifugation, wobei das resultierende Proteinpräzipitat üblicherweise einen Wassergehalt zwischen 50 Gew.-% und 80 Gew.-% aufweist.

Die Proteine werden dann üblicherweise wieder in Lösung gebracht, wobei die Rückverdünnung mit einer wässrigen Lösung erfolgt, deren pH-Wert so eingestellt ist, dass nach der Rückverdünnung die wässrige Proteinkonzentratlösung einen pH-Wert zwischen 4,5 und 7,5, insbesondere zwischen 5,4 und 7,2 aufweist. Dabei ist die Pufferwirkung der Proteine zu berücksichtigen. Die Lösung zur Rückverdünnung kann auch NaCl enthalten, insbesondere zwischen 0,5 und 2 Gew.-%, je nach Proteinherkunft. Bevorzugt zeichnet sich die fertige Proteinkonzentratlösung durch eine Proteinkonzentration zwischen 12 und 35 Gew.-% aus, insbesondere zwischen 16 und 30 Gew.-%, ganz besonders bevorzugt zwischen 18 und 22 Gew.-%.

Wichtig ist, dass die Proteine nach dem Ausfällen nicht getrocknet werden, um eine hohe, bevorzugt volle Funktionalität zu erhalten. Zur Haltbarmachung können die Proteinkonzentrate beispielsweise eingefroren oder in Abhängigkeit der Proteinsorte auch pasteurisiert werden.

In Weiterbildung der Erfindung ist die Herstellung der Pflanzenproteinkonzentratlösung Bestandteil bzw. vorgelagerter Verfahrensschritt des erfindungsgemäßen Verfahrens.

Wie erwähnt, müssen sich die extrahierten Pflanzenproteine der zum Einsatz kommenden Pflanzenproteinkonzentratlösung durch eine ausreichend hohe, insbesondere volle Funktionalität auszeichnen. Eine zur Durchführung des erfindungsgemäßen Verfahrens geeignete Pflanzenproteinkonzentratlösung zeichnet sich dadurch aus, dass sie in einer aus einer dynamischen Differenz-Kalorimetrie-Messung resultierenden, dem Zusammenhang zwischen der spezifischen umgesetzten Wärmeenergie und der Temperatur beschreibenden DSC-Kurve einen endothermen Peak aufweist, der gekennzeichnet ist durch eine Peaktemperaturspanne, über die sich der Peak erstreckt, die begrenzt ist durch eine Peakanfangstemperatur und eine Peakendtemperatur. Anders ausgedrückt kann durch vorstehend genannte und im Folgenden noch im Detail erläuterte Untersuchungsmethode (Differenz-Kalorimetrie-Messung) überprüft werden, ob es sich um eine geeignete bzw. im Rahmen der Erfindung liegende Pflanzenproteinkonzentratlösung handelt, deren Proteine eine hohe bzw. ausreichende Funktionalität aufweisen. Dies ist dann der Fall, wenn ein vorstehend genannter und im Folgenden noch weiter beschriebener Peak feststellbar ist, wobei es besonders bevorzugt ist, wenn die Denaturierungsenthalpie (entspricht der Peakfläche) mindestens 10J/g Protein beträgt. Zur Durchführung der Differenz-Kalorimetrie-Messung werden 50 bis 100 mg des Pflanzenproteinkonzentrats mit bekanntem Proteingehalt in einem Stahlgefäß mit einem Volumen von 100µl eingewogen und druckdicht verschlossen. Ein weiteres Stahlgefäß ist mit Wasser gefüllt und dient bei der Messung als Referenz. Als Messsystem kommt bevorzugt Mettler Toledo Typ DSC 1 Star zum Einsatz. Die Differenz-Kalorimetrie-Messung besteht in der Durchführung eines Temperatur-Scans mit einer Aufheizrate von 2 K/min. Der Scanbereich startet bei 25° Celsius und endet bevorzugt bei 130° Celsius. Ein Denaturieren der Proteine in einem spezifischen Temperaturbereich wird in der erhaltenen DSC-Kurve als endothermer Peak sichtbar. Ein solcher Peak ist durch eine Peakanfangstemperatur, eine Peakmaximumtemperatur, d.h. eine Temperatur am Peakmaximum, insbesondere zwischen 90° Celsius und 125° Celsius sowie eine Peakendtemperatur gekennzeichnet. Der Temperatur-Bereich, d.h. die Peaktemperaturspanne, die dabei zwischen Peakanfangstemperatur und Peakendtemperatur überstrichen wird, ist bevorzugt zwischen 25° Celsius und 40° Celsius, insbesondere zwischen 30° Celsius und 35° Celsius breit. Die Peak-Fläche des endothermen Peaks in der DSC-Kurve ist ein Maß für das Ausmaß der Denaturierung. Unterschiedliche Proteine haben dabei unterschiedliche Denaturierungsenthalplen. Diese liegen bevorzugt bei besonders geeigneten Pflanzenproteinkonzentratlösungen oberhalb von 10 J/g Protein, ganz besonders bevorzugt zwischen 12 J/g und 30 J/g Protein. Für eine jeweilige, d.h. bestimmte Proteinsorte ist die Denaturierungsenthalpie ein Maß dafür, wie viel des vorhandenen Proteins noch nativ vorliegt, also eine Funktionalität aufweist und wie viel schon denaturiert Ist. Ein möglichst großer Wert ist anzustreben.

Im Rahmen der Erfindung wurde festgestellt, dass zwar die Ausbildung eines Peaks in einer DSC-Kurve bei einer Differenz-Kalorimetrie-Messung einer zum Einsatz kommenden Pflanzenproteinkonzentratlösung eine erste notwendige Voraussetzung für die Eignung und Ausbildung bzw. Beschaffenheit der Pflanzenproteinkonzentrat-Lösung zur Durchführung eines erfindungsgemäßen Verfahrens ist, dass jedoch das Denaturieren der Pflanzenproteine nicht gleichbedeutend mit ihrem Aggregrationsverhalten, d.h. Gelbildungsverhalten ist. Mit anderen Worten müssen sich die Pflanzenproteine der zum Einsatz kommenden Pflanzenproteinkonzentratlösung nicht nur durch native, d.h. noch denaturierbare Pflanzenproteine auszeichnen, sondern zusätzlich durch ein geeignetes Gelbildungsverhalten als zweite BeschaffenheitsVoraussetzung. So zeigt beispielsweise eine Pflanzenproteinkonzentratlösung auf Basis von Lupinenprotein bei einer wie beschrieben durchgeführten Differenz-Kalorimetrie-Messung durchaus einen deutlichen Peak, bildet jedoch trotzdem keine elastischen Gele aus. Vermutlich sind die Ursachen hierfür auf molekularer Ebene zu suchen. Es wird vermutet, dass eine wesentliche Voraussetzung zur Gelbildung das nach Außen-Falten der internen SH-Gruppen der Proteine ist, die dann miteinander unter Bildung von Disulfidbrücken reagieren können. Darüber hinaus werden mehr oder wenige starke hydrophobe Wechselwirkungen zwischen den Proteinen eingegangen.

Ob die zum Einsatz kommende Pflanzenproteinkonzentratlösung also ein zur Durchführung des erfindungsgemäßen Verfahrens ausreichendes Aggregationsverhalten aufweist bzw. ob die eingesetzte Pflanzenproteinsorte zur Durchführung des erfindungsgemäßen Verfahrens geeignet ist (Lupine ist dies beispielsweise nicht), also die zweite Beschaffenheitsvoraussetzung erfüllt, kann mittels der Oszillationsrheologie überprüft werden. Der Vorteil dieser Methode besteht darin, dass die gemessene Substanz, vorliegend also die zum Einsatz kommende Pflanzenproteinkonzentratlösung durch die Messung in keiner Weise beeinflusst wird, da diese nicht gerührt wird, sondern das Messsystem nur um einen kleinen Winkel oszilliert. Zur Durchführung der Oszillationsrheologie wird die Pflanzenproteinkonzentratlösung in ein geeignetes Stahlgefäß (Becher: C25 DIN-System) eingefüllt und zwar zwischen 10 und 15 ml. Das Stahlgefäß wird druckdicht verschlossen. Die Messung der rheologischen Eigenschaften erfolgt mittels des Zylinders (C25 DIN-System) der sich mit der Proteinkonzentratlösung in dem Stahlgefäß (Becher) befindet. Der Antrieb des Zylinders im Becher erfolgt über eine Magnetkupplung, so dass das System absolut druckdicht ist. Für die Messung kommt bevorzugt das Messsystem Bohlin Gemini HR^{nano} Koaxialer Zylinder (C25 DIN3019) zum Einsatz. Gemessen werden G' und G", also der elastische und der viskose Anteil des viskoelastischen Konzentrates. Die beiden Anteile G' und G" verändern sich beim nachfolgenden Temperaturprogramm. Gestartet wird bei 25° Celsius. Dann erfolgt eine schnelle Erhitzung mit einer Aufheizrate zwischen 3 K/min und 5 K/min bis auf die jeweilige Peak-Endtemperatur aus der vorhergehenden Differenz-Kalorimetrie-Messung. Eine kurze Haltezeit zwischen 2 und 5 min bei dieser Temperatur stellt sicher, dass das Pflanzenproteinkonzentrat auch vollständig dieser Temperatur ausgesetzt war. Danach wird schnell mit einer Abkühlrate zwischen 3 K/min und 5 K/min abgekühlt. Während des vorgenannten Temperaturprogramms werden kontinuierlich G' und G" aufgezeichnet. Während der Aufheizphase wird, insbesondere im Bereich der Peak-Anfangstemperatur bei geeigneten Pflanzenproteinkonzentratlösungen mit einem zur Durchführung des erfindungsgemäßen Verfahrens geeigneten bzw. ausreichenden Aggregationsverhaltens ein extremer Anstieg der G'-Werte (Speichermodulwerte) beobachtet. Zur Durchführung des erfindungsgemäßen Verfahrens ist die Pflanzenproteinkonzentratlösung dann geeignet, wenn das Speichermodul noch während der Aufheizphase um mindestens den Faktor 6, insbesondere den Faktor 6-12, ganz besonders bevorzugt den Faktor 7 bis 12 ansteigt, verglichen mit dem Speicherwert zu Beginn der Messung, insbesondere bei 25° Celsius. Lupinenprotein erreicht diesen Faktor nicht. Das Speichermodul G' steigt dann beim Abkühlen weiter an, bis das Gel verfestigt ist. Charakteristisch für ein für das erfindungsgemäße Verfahren geeignetes Aggregationsverhalten ist jedoch der Anstieg von G' während der Aufheizphase im Bereich zwischen der Peakanfangstemperatur und der Peakendtemperatur - überraschend steigt das Elastizitätsmodul mit zunehmender Temperatur bis zum Erreichen der Peakendtemperatur an.

Die Auswahl bzw. Eignung des eingesetzten Pflanzenproteinkonzentrates (Pflanzenproteinkonzentratlösung) ist wesentlicher Bestandteil der Erfindung. Die zuvor beschriebenen Tests dienen zur Charakterisierung einer Pflanzenproteinkonzentratlösung zur Durchführung der Erfindung bzw. dienen zur Definition einer geeigneten Beschaffenheit der Pflanzenproteinkonzentratösung. Auf Basis einer geeigneten Pflanzenproteinkonzentratlösung kann eine Zusammensetzung (Rezeptur) als Basis für den erfindungsgemäßen Aggregationsvorgang hergestellt werden. Die Zusammensetzung kann im einfachsten Fall ausschließlich aus der Pflanzenproteinkonzentratlösung bestehen oder, was bevorzugt ist, mindestens eine weitere Zutat, wie Fett und/oder Zucker und/oder Salz und/oder Aroma und/oder Farbstoff enthalten. Der Gesamtproteingehalt der Zusammensetzung trägt bzw. wird eingestellt auf einen Wert zwischen 12 Gew.-% und 28 Gew.-%. Die im Rahmen der vorliegenden Anmeldung offenbarten Proteingehalte bzw. -antelle werden bevorzugt bestimmt mittels Stickstoffbestimmung nach Kjeldahl (AOAC 991.20 "Cheese-Method").

Ebenso wie die Proteinkonzentratlösung zeichnet sich die Zusammensetzung dadurch aus, dass diese in einer aus einer dynamischen Differenz-Kalorimetrie-Messung resultierenden, den Zusammenhang zwischen der spezifischen umgesetzten Wärmeenergie und der Temperatur beschreibenden DSC-Kurve einen endothermen Peak aufweist, der gekennzeichnet ist durch eine Peaktemperaturspanne, über die sich der Peak erstreckt, die begrenzt ist durch eine Peakanfangstemperatur und eine Peakendtemperatur. Die Ermittlung der DSC-Kurve der Zusammensetzung mit ihrem endothermen Peak sowie der zugehörigen Peaktemperaturen, wie der Peakanfangstemperatur, der Peakendtemperatur, der Peaktemperaturspanne und der Peakmaximumtemperatur erfolgt wie zuvor im Zusammenhang mit der Proteinkonzentratlösung beschrieben, mit dem Unterschied, dass anstelle der Proteinkonzentratlösung 50 bis 100mg der Zusammensetzung untersucht bzw. der Differenz-Kalorimetrie-Messung unterzogen werden. Konkret bedeutet dies, dass zur Durchführung der Differenz-Kalorimetrie-Messung der Zusammensetzung 50 bis 100 mg der Zusammensetzung mit in einem Stahlgefäß mit einem Volumen von 100µl eingewogen und druckdicht verschlossen werden. Ein weiteres Stahlgefäß ist mit Wasser gefüllt und dient bei der Messung als Referenz. Als Messsystem kommt bevorzugt Mettler Toledo Typ DSC 1 Star zum Einsatz. Die Differenz-Kalorimetrie-Messung besteht in der Durchführung eines Temperatur-Scans mit einer Aufheizrate von 2 K/min. Der Scanbereich startet bei 25° Celsius und endet bevorzugt bei 130° Celsius. Ein Denaturieren der Proteine in einem spezifischen Temperaturbereich wird in der erhaltenen DSC-Kurve als endothermer Peak sichtbar. Ein solcher Peak ist durch eine Peakanfangstemperatur, eine Peakmaximumtemperatur, d.h. eine Temperatur am Peakmaximum gekennzeichnet.

Die Zusammensetzung kann im einfachsten Fall der Proteinkonzentratlösung entsprechen, oder sie unterscheidet sich bevorzugt hiervon durch Zusätze wie Fett, etc. Bevorzugt ist die Zusammensetzung vegan - in diesem Fall handelt es sich bei dem Fett bzw. den fetten um pflanzliches Fett. Denkbar ist es jedoch auch, zusätzlich oder alternativ zu pflanzlichem Fett tierisches fett einzusetzen. Je nach Art und Menge der Zusätze, wie beispielsweise NaCl führen diese zu einer Veränderung der Zusammensetzung der wässrigen Phase, wodurch der endotherme Peak der Zusammensetzung gegenüber dem endothermen Peak der Proteinkonzentratlösung auf der Temperaturachse verschoben sein kann. Wird beispielsweise im Zusammenhang mit der Herstellung der Zusammensetzung NaCl zugegeben, führt dies dazu, dass der endotherme Peak der Zusammensetzung verglichen mit dem endothermen Peak der Proteinkonzentratlösung hin zu höheren Temperaturen verschoben wird. Bevorzugt wird der NaCl-Gehalt der Zusammensetzung so eingestellt, entweder durch NaCl-Zugabe oder durch Wahl einer Proteinkonzentratlösung mit entsprechend hohem NaCl-Gehalt, dass die Peakendtemperatur des endothermen Peaks der Zusammensetzung mindestens 94°C, bevorzugt mindestens 96°C, noch weiter bevorzugt mindestens 98°C, ganz besonders bevorzugt mindestens 100°C oder darüber beträgt. Wichtig für die im Folgenden beschriebene Aggregation der Zusammensetzung ist es, dass es sich bei den im Zusammenhang mit der Aggregation der Zusammensetzung (Rezeptur) beschriebenen Peaktemperafuren um diejenigen aus der DSC-Kurve der Zusammensetzung handelt. Wenn also im Zusammenhang mit der Aggregation der Zusammensetzung von Peaktemperaturen oder Peaktemperaturen der Zusammensetzung die Rede ist, handelt es sich um Peaktemperaturen aus der DSC-Kurve der Differenz-Kaiorimetrie-Messung der Zusammensetzung.

Die Aggregation der Zusammensetzung zu einem elastischen, schnittfesten Gel findet je nach Proteinsorte und ggf. Wahl eines entsprechenden NaCl-Gehaltes im Allgemeinen erfindungsgemäß oberhalb von 100° Celsius statt. In den Fällen, in denen die PeakEndtemperatur der Zusammensetzung, ebenfalls erfindungsgemäß, knapp unter 100° Celsius liegt (dies kann z.B. bei Mung-Bohnen-Protein der Fall sein), insbesondere oberhalb von 94° Celsius, noch weiter bevorzugt oberhalb von 98° Celsius findet erfindungsgemäß trotzdem während der Aggregation zumindest partiell eine Temperaturerhöhung der Zusammensetzung auf mindestens 100° Celsius statt - dies ist darauf zurückzuführen, dass zum Erreichen einer geeigneten Maximaltemperatur der Zusammensetzung für die Aggregation die zum Einsatz kommenden Heizmittel auf eine höhere Temperatur als diese Maximaltemperatur aufgeheizt werden müssen, um in vertretbarer Prozesszeit eine ausreichende bzw. optimale Aggregation zu erreichen, wodurch zumindest partiell in der Zusammensetzung Temperaturen von über 100° Celsius erreicht werden. Da oberhalb von 100° Celsius der Wasserdampfdruck höher ist als der umgebende Luftdruck und insbesondere als der atmosphärische Normaldruck (1013 mbar), wird die Aggregation erfindungsgemäß in einem verschließbaren, druckfesten Gefäß (Druckbehälter) durchgeführt, das bzw. der für einen entsprechenden Überdruck ausgelegt ist, insbesondere für einen Absolutdruck zwischen 1,3 und 5 bar, insbesondere zwischen 2 und 3 bar. Die Zusammensetzung wird über geeignete Heizmittel in dem Druckbehälter auf die vorerwähnte Maximaltemperatur (nicht zu verwechseln mit der geringeren Maximumtemperatur am Peakmaximum des endothermen Peaks der Zusammensetzung) erhitzt, die insbesondere zumindest partiell mindestens 100° Celsius beträgt. Die Maximaltemperatur zeichnet sich dadurch aus, dass sie oberhalb der Peakanfangstemperatur der Zusammensetzung liegt und bevorzugt oberhalb der Peakmaximumtemperatur der Differenz-Kalorimetrie-Messung der Zusammensetzung. Wie später noch erläutert werden wird, liegt die Maximaltemperatur bevorzugt im Bereich der Peakendtemperatur der Zusammensetzung. Nach Erreichen der Maximaltemperatur, insbesondere nach Einhalten einer später noch zu erläuternden, fakultativen, Heißhaltezeit wird die Zusammensetzung abgekühlt und zwar auf eine Kühletemperatur, die unterhalb von 100° Celsius liegt sowie unterhalb der Peakanfangstemperatur der Zusammensetzung. Der erfindungsgemäß zum Einsatz kommende Druckbehälter wird benötigt, um mittels eines auf die Zusammensetzung einwirkenden Gegendrucks ein Sieden und somit eine unerwünschte Blasenbildung während des Aggregationsprozesses zu vermeiden. Wie später noch erläutert werden wird, beträgt der Gegendruck zumindest dem Sattdampfdruck der Zusammensetzung bei einer jeweiligen Prozesstemperatur, bevorzugt zuzüglich eines Sicherheitsaufschlags.

Im Hinblick auf die Bereitstellung des Gegendruckes gibt es unterschiedliche Möglichkeiten.

Für die Aufheizphase ist es denkbar, dass sich der Gegendruck ohne weitere Maßnahmen allein durch den Erhitzungsprozess im Druckbehälter ausbildet. Zumindest jedoch für den Abkühlprozess muss zumindest zeitweise bis zum vollständigen Unterschreiten der 100°-Celsius-Grenze eine aktive Gegendruckbeaufschlagung der Zusammensetzung erfolgen, beispielsweise durch die Beaufschlagung des Druckbehälters mit einem entsprechenden Druckgas, insbesondere Druckluft. Im einfachsten Fall erfolgt der Aufbau eines geeigneten, für den gesamten Aggregations-Prozess ausreichenden Gegendrucks bereits vor und/oder während des Aufheizens. Selbstverständlich ist die Erfindung nicht darauf beschränkt, den Gegendruck durch Druckgas, insbesondere Druckluft bereitzustellen - andere Alternativen, wie beispielsweise eine mechanische und/oder hydraulische Druckkraftbeaufschlagung des Druckbehälters und/oder der Zusammensetzung, insbesondere durch Deformation des durch Volumenverkleinerung des Druckbehälters, beispielsweise durch Einfahren eines Kolbens, etc. ist denkbar - wesentlich ist, dass wie erwähnt, eine Gasblasenbildung durch Sieden unterbleibt, insbesondere und besonders während der Abkühlphase, da hier insbesondere partielle Siedegefahr im Kontaktbereich der Zusammensetzung zu umgebenden Materialien besteht. Jedenfalls sollte ein entsprechender Gegendruck oberhalb des Atmosphärendrucks zumindest für die Zeit vorhanden sein und aufrecht erhalten werden, solange die Zusammensetzung, wenn auch nur partiell, eine Temperatur von 100° Celsius oder höher aufweist.

Insgesamt resultiert aus dem erfindungsgemäßen Verfahren ein, bevorzugt lufteinschlussfreier, schnittfester, bevorzugt veganer, Lebensmittelgelkörper mit einer kontinuierlichen Phase auf Basis miteinander aggregierter, d.h. dreidimensional vernetzter Pflanzenproteine, der sich durch einen hohen Proteingehalt und gute Geleigenschaften einsetzt. Der Lebensmittelgelkörper eignet sich insbesondere für den Einsatz als Käse- oder Wurstersatz und kann in Block-, Scheiben-, Raspel-, Stift- oder Würfelform, etc. bereitgestellt werden.

Neben der Tatsache, dass sich durch das erfindungsgemäße Verfahren die Pflanzenproteingehalte in nahezu beliebiger Höhe in Produkt, d.h. in Lebensmittelgelkörper einstellen lassen, besteht ein wesentlicher Vorteil des erfindungsgemäßen Verfahrens sowie des erfindungsgemäßen Lebensmittelgelkörpers darin, dass das eigentliche Gelsystem von den Pflanzenproteinen gebildet wird und es keiner zusätzlichen Gelbildner wie beispielsweise Stärke oder Hydrokolloiden bedarf. Erfindungsgemäß wird daher, auf den Zusatz von Stärke und/oder Hydrokolloiden verzichtet, bevorzugt auch auf sonstige Gelbildnern zu verzichten.

Es hat sich gezeigt, dass es für die Qualität, d.h. die Festigkeit und Elastizität des Pflanzenproteingels vorteilhaft ist, die Peaktemperaturspanne, d.h. den Temperaturbereich des DSC-Peaks der Zusammensetzung zu einem großen Teil, insbesondere größtenteils, ganz besonders bevorzugt vollständig zu durchfahren und zwar weiter bevorzugt möglichst schnell, wobei die Zusammensetzungstemperatur nach dem Aufheizen durch Wahl einer später noch zu erläuternden, bevorzugten großen Abkühlrate möglichst rasch wieder unterhalb der DSC-Peakanfangstemperatur der Zusammensetzung gebracht werden sollte. Dabei ist es bevorzugt, dass das Pflanzenproteinkonzentrat die vorgesehene Maximaltemperatur auch vollständig erreicht. Zu langsames Hochfahren der Temperatur, unvollständiges Erreichen der Maximaltemperatur sowie zu lange Haltezeiten im Bereich der Maximaltemperatur können zu einer Verschlechterung der Gelqualität führen. Ganz besonders bevorzugt ist es, die Peakendtemperatur des Denaturierungspeaks der Zusammensetzung zu erreichen, um somit Gele mit optimalen Eigenschaften zu erzeugen.

Konventionell werden Massen in Behältern entweder durch Erhitzen der Behälterwandung und Rühren der Massen oder aber durch direkten Eintrag von Wasserdampf erhöhter Temperatur (Direktdampf) erhitzt. Bei der Aggregation der Zusammensetzung sollte in Weiterbildung der Erfindung jedoch kein Scherkrafteintrag erfolgen, insbesondere sollte nicht gerührt werden, da hieraus eine irreversible Zerstörung der Gele erfolgen kann. Daher sollte auf Direktdampf-Eintrag verzichtet werden. Dies hat dann jedoch zur Folge, dass die Erhitzung allein durch die Wärmeleitung der Zusammensetzung erfolgt, was sehr zeitintensiv ist. Insbesondere ist auf eine Überprozessierung der Außenbereiche der Zusammensetzung durch Wahl von zu hohen Temperaturen zu achten.

Im Hinblick auf die bevorzugte Ausbildung bzw. Beschaffenheit einer zur Durchführung des erfindungsgemäßen Verfahrens geeigneten bzw. zu gewinnenden und/oder bereitzustellenden Pflanzenproteinkonzentratlösung wurde bereits umfassend ausgeführt. Von besonderem Vorteil ist es, wenn die Pflanzenproteinkonzentratlösung neben der Ausbildung eines endothermen Peaks in der DSC-Kurve einer Differenz-Kalorimetrie-Messung und zusätzlich zu einem Anstieg (zumindest Versechsfachung) des Speichermoduls G' in einer bereits im Detail beschriebenen Oszillationsrheologie-Messung sich dadurch auszeichnet, dass diese (unter erfindungsgemäßer Beaufschlagung mit Gegendruck) zu einem Gelkörper aggregierbar ist, dessen Speichermodul G' in einem Platte-Platte-Rheometer zu einem Messwert von mindestens 30.000 Pa bevorzugt mindestens 50.000 Pa, weiter bevorzugt zwischen 50.000 Pa und 150.000 Pa, noch weiter bevorzugt zwischen 50.000 Pa und 100.000 Pa führt. Anders ausgedrückt sollte eine zur Durchführung des erfindungsgemäßen Verfahren besonders geeignete Pflanzenproteinkonzentratlösung in Weiterbildung der Erfindung als dritte Beschaffenheitsvoraussetzung durch Aggregation zu einem Gelkörper führen, der bei einer vorgenannten rheologischen Messung zu einem zuvor angegebenen Speichermodulwert G' führt.

Zur Aggregation, d.h. zur Ausbildung eines entsprechenden Gel-Blocks mit hohem Speichermodul erfolgt die Aggregation der Pflanzenproteinkonzentratlösung, wie in Anspruch 1 im Zusammenhang mit der Aggregation der Zusammensetzung angegeben, d.h. in einem Druckbehälter durch Aufheizen auf eine Maximaltemperatur, insbesondere zumindest partiell von mindestens 100° Celsius und oberhalb der Peakanfangstemperatur der Pflanzenproteinkonzentratlösung, Insbesondere auf die Peakendtemperatur, woraufhin die Pflanzenproteinkonzentratlösung bzw. das sich bereits ausgebildete Gel auf eine Temperatur unterhalb von 100° Celsius und unterhalb der Peakanfangstemperatur der Pflanzenproteinkonzentratlösung liegende Kühltemperatur abgekühlt wird, wobei das Aufheizen und das Abkühlen, zumindest im Bereich von Temperaturen von über 100° Celsius bei einem auf die Pflanzenproteinkonzentratlösung wirkenden, über AtmosphärenNormaldruck liegenden Gegendruck in dem Druckbehälter erfolgt, derart, dass ein Sieden der Pflanzenproteinkonzentratlösung vermieden wird. Zur Bestimmung des Speichermoduls G' des so erhaltenen Gelkörpers wird aus diesem eine kreisrunde Scheibe mit einem Durchmesser von 20 mm und einer Dicke bzw. Höhe von 2,5 mm gewonnen, insbesondere durch Ausstechen. Die Scheibe wird auf 16° Celsius temperiert und dann direkt auf die Messeinheit gegeben und der Spaltabstand auf 2,5 mm eingestellt. Zum Einsatz kommt dabei bevorzugt ein Bohlin-Rheometer Gemini HR Nano mit einer Platte-Platte-Messsystem (PP20). Zur Messung wird die Scheibe direkt unter die obere Platte im Rheometer platziert und soweit herunter gefahren, bis sich eine Normalkraft von 1N einstellt. Danach wird die Probe bei einem konstanten Deformationsmodus von 1% bei einer Frequenz von 1 Hz oszilliert. Die Messpunkte nach 100, 200 und 300s werden exportiert und ein Mittelwert gebildet. Pflanzenproteinkonzentratlösungen aus ungeeigneten Pflanzenproteinen, wie insbesondere Lupine, erreichen die gewünschten hohen Speichermodulwerte nicht und führen nicht zu den gewünschten hochelastischen Gelsystemen, sondern eher zu breiigen Partikelgelen.

Erfindungsgemäß ist vorgesehen, dass die zum Einsatz kommende Pflanzenproteinkonzentratlösung einen gewissen Prozentanteil an pflanzlichen Proteinen zwischen 12 und 35 Gew.-% aufweist und einen pH-Wert aus einem Wertebereich zwischen 4,5 und 7,5, insbesondere zwischen 5,4 und 7,2. Weiler ist vorgesehen, dass der NaCl-Gehalt der Pflanzenproteinkonzentrallösung zwischen 0 und 1,0 mol/l beträgt. Gemäß der Erfindung ist die Pflanzenprolainkoozentrallösung so beschaffen, dass die mittels der vorbeschriebenen dynamischen Differenz-Kalorimetrie-Messung bestimmbare Denaturiemngsenthalpie der Proteine der Pflanzenproteinkonzentratlösung mindestens 10 J/g, insbesondere zwischen 10 J/g und 30 J/g, weiter bevorzugt zwischen 15 J/g und 25 J/g beträgt Als besonders vorteilhaft hat es sich herausgestellt, wenn das Speichermodul G' der Planzenproteinkonzentratlösung bei der vorerwähnten, u.a. in Patentanspruch 1 beschriebenen Oszillationsrheologie-Messung nach dem Durchfahren der Peaktemperaturspanne der Pflanzenproteinkonzentratlösung von der Peakanfengstemperatur in Richtung der Peakendtemperatur der Pflanzenproteinkonzentrallösung, also noch vor Beginn des Abkühlvorgangs mindestens 900 Pa beträgt und ganz besonders bevorzugt einen Wert aus einem Bereich zwischen 900 Pa und 1500 Pa, insbesondere zwischen 900 und 1200 Pa aufweist.

Im Hinblick auf die Wahl der Größe des Gegendrucks ist gemäß der Erfindung vorgesehen, dass dieser zumindest dem Sattdampfdruck der Zusammensetzung bei der jeweiligen Temperatur der Zusammensetzung während des Aggregationsvorgangs entspricht. Bevorzugt beträgt er dabei dem Sattdampfdruck zuzüglich eines Sicherheitsaufschlags von mindestens 0,1 bar, bevorzugt von mindestens 0,25 bar oder höher.

Wie bereits erwähnt, kann der auf die Zusammensetzung wirkende Gegendruck auf unterschiedliche Weise erzeugt und/oder appliziert werden. Am einfachsten ist es, einen entsprechend hoch gewählten und sicher ausreichenden Gegendruck bereits vor der Aufheizphase und/oder während der Aufheizphase im Druckbehälter zu applizieren. Grundsätzlich ist es, wie erwähnt, denkbar, dass sich ein (natürlicher) Gegendruck automatisch ausschließlich durch das Aufheizen der Zusammensetzung im geschlossenen Druckbehälter aufbaut. Spätestens beim Abkühlen muss für eine aktive Applizierung eines ausreichend hohen Gegendrucks gesorgt werden, um sicherzustellen, dass der vorhandene Gegendruck ausreichend groß ist, um ein Sieden zu vermeiden. Dies ist darauf zurückzuführen, dass der Gelkörper beim Erkalten in der Regel langsamer abkühlt, als ein ihn umgebendes Medium und/oder Material, wie beispielsweise eine Heizung und/oder eine Behälterwandung, wodurch es im Kontaktbereich zwischen dem Gelkörper und dem umgebenden Medium und/oder Material bei nicht ausreichendem Gegendruck zu einem partiellen Sieden und damit zu Gasblasenbildung kommen kann, was erfindungsgemäß durch Aufrechterhaltung eines ausreichenden Gegendrucks vermieden wird.

Zur Vermeidung einer Beschädigung oder Zerstörung des Gelsystems ist erfindungsgemäß vorgesehen, dass während des des Abkühlens und gemäß einer vorteilhaften Weiterbildung bereits während des Aufheizens kein Scherkrafteintrag, beispielsweise durch Rühren, in die Zusammensetzung erfolgt. Auch ist es bevorzugt, auf eine Erwärmung durch Dampf-Direktelnspritzung zu verzichten - insgesamt ist es vorteilhaft, die Bewegung bzw. Durchmischung der Zusammensetzung während der Aggregation (Aufheiz- und Abkühlphase) auf ein Minimum einzuschränken und bevorzugt vollständig zu vermeiden.

Wie bereits erwähnt, ist es zum Erhalten optimaler Gelsystemeigenschaften von Vorteil, die gesamte Peaktemperaturspanne des endothermen Peaks der Zusammensetzung, d.h. den Temperarturbereich zwischen Peakanfangs- und Peakendtemperatur der Zusammensetzung zumindest näherungsweise vollständig, ganz besonders bevorzugt vollständig während der Aufheizphase zu durchfahren. Als Minimum-Anforderung sollte die Maximaltemperatur, auf die die Zusammensetzung zur Aggregation aufgeheizt wird, mindestens der Peakmaximumtemperatur am Peakmaximum des endothermen Peaks der Zusammensetzung entsprechen Erfindungsgemäß soll die Maximaltemperatur, auf die die Zusammensetzung zur Aggregation aufgeheizt wird aus einem Temperaturbereich zwischen der Peakmaximumtemperatur der Zusammensetzung und Peakendtemperatur der Zusammensetzung zuzüglich 20% gewählt werden. Grundsätzlich ist ein geringfügiges Überschreiten der Peakendtemperatur der Zusammensetzung unkritisch.

Erfindungsgemäß ist vorgesehen, dass die mittlere Aufheizrate, zumindest ab Erreichen der Peakanfangstemperatur der Zusammensetzung einem Wertebereich zwischen 4 K/min und 15 K/min, weiter bevorzugt zwischen 8 K/min und 15 K/min gewählt ist. Bevorzugt ist es, wenn die mittlere Abkühlrate, zumindest bis zum Erreichen der Peakanfangstemperatur der Zusammensetzung mindestens 4 K/min, weiter bevorzugt mindestens 8 K/min beträgt und/oder aus einem Wertebereich zwischen 4 K/min und 15 K/min, weiter bevorzugt zwischen 8 K/min und 15 K/min gewählt ist. Besonders bevorzugt ist es, die Aufheizrate und/oder die Abkühlrate, zumindest im Temperaturbereich der Peaktemperaturspanne der Zusammensetzung, konstant zu halten.

Je nach Pflanzenproteinsorte kann es sinnvoll sein, nach der Aufheizphase vor Beginn der Abkühlphase eine Heißhaltephase vorzusehen, insbesondere zwischen 0,5 und 10 Minuten, bevorzugt zwischen 0,2 und 1 Minute, wobei die Heißhaltetemperatur aus einem Temperaturbereich zwischen der Peakmaximumtemperatur der Zusammensetzung und der Maximaltemperatur gewählt ist und ganz besonders bevorzugt der Maximaltemperatur entspricht.

Im Hinblick auf die Auswahl der Pflanzenproteine als Basis für eine Extraktion und Aufkonzentration zum Erhalten des zum Einsatz kommenden Pflanzenproteinkonzentrats gibt es unterschiedliche Möglichkeiten. Grundsätzlich ist es möglich, die Pflanzenproteinkonzentration sortenrein zu bilden oder als Mischung aus mindestens zwei unterschiedlichen Pflanzensorten. Bevorzugt sind die Pflanzenproteine (sortenrein oder als Mischung) gewonnen aus folgenden pflanzlichen Rohstoffen, wobei die Auswahl hierauf nicht beschränkt ist: Mandel, Mungbohne, Kokosnuss, Kichererbse, Erdnuss, Cashew, Hafer, Erbse, Bohne, Reis, Weizenkleber, Linsen, Amaranth, Bohnen, weiße Bohnen, Kidneybohnen, Favabohnen, Sojabohnen, Getreide.

In Weiterbildung der Erfindung ist mit Vorteil vorgesehen, dass der Fettgehalt der Zusammensetzung aus einem Wertebereich zwischen 0 Gew.-% und 30 Gew.-%, insbesondere zwischen 1 Gew.-% und 30 Gew.-%, weiter bevorzugt zwischen 10 Gew.-% und 20 Gew.-% gewählt ist. Der im Rahmen vorliegender Offenbarung diskutierte Fettgehalt kann bestimmt werden nach der gängigen Soxhlet-Methode AOAC 933.05 Fat in Cheese. Zusätzlich oder alternativ zu einem, bevorzugt bei Raumtemperatur von 22° Celsius festen, Fett kann der Zusammensetzung als Zutat Zucker zugesetzt werden. Zusätzlich oder alternativ ist es bevorzugt, den NaCl-Gehalt der Zusammensetzung auf einen Wert aus einem Wertebereich zwischen 1,1 und 1,6 Gew.-% einzustellen. Insbesondere durch die Einstellung eines entsprechenden Salzgehaltes kann sichergestellt werden, was bevorzugt ist, dass die Peakendtemperatur der Zusammensetzung bei der Aggregation über 94° Celsius, vorzugsweise über 98° Celsius, ganz besonders bevorzugt mindestens 100° Celsius oder darüber beträgt und ganz besonders bevorzugt in einem Temperaturbereich zwischen 101° Celsius und 140° Celsius liegt. Insbesondere für den Fall der fakultativen Zugabe größerer Zuckermengen kann die Peakendtempertur der Zusammensetzung auch darüber liegen, da durch Zuckerzugabe (wie bei NaCl-Zugabe) der Denaturierungspeak der Zusammensetzung (verglichen mit dem Denaturierungspeak der Proteinkonzentratlösung) hin zu höheren Temperaturen verschoben wird. Die Zugabe von Zucker, insbesondere Saccharose, ist bis zu einem Gesamtzuckeranteil an der Zusammensetzung von 60Gew.-% möglich.

Zusätzlich oder alternativ zu Fett und/oder Zucker und/oder Salz kann die Zusammensetzung mindestens eine funktionale Zutat umfassen, insbesondere aus der Substanzgruppe: farbgebende Substanz, Aroma, insbesondere Käsegeschmacksaroma, Konservierungsmittel, geschmacksgebende Zutat, insbesondere Kräuter. Bevorzugt ist es insbesondere auf Konservierungsmittel zu verzichten.

Bevorzugt werden die Zutaten der Zusammensetzung, insbesondere dann, wenn die Zusammensetzung Fett enthält, emulgiert, insbesondere durch einen entsprechenden Scherkrafteintrag, wobei es besonders bevorzugt ist, wenn während und/oder insbesondere nach der Emulgierphase der Zusammensetzung Gasblasen entzogen und/oder bei dem Emulsionsprozess gebildeter Schaum entfernt wird und zwar durch einen Evakuierprozess bzw. -schritt bei dem die Zusammensetzung mit Unterdruck beaufschlagt wird.

Im Folgenden werden in Form von Tabellen 1 bis 4 acht Beispielrezepturen für vorteilhafte Zusammensetzungen auf Basis einer Mandelproteinkonzentratlösung (Beispiele 1 bis 4), sowie auf Basis einer Mungbohnenproteinkonzentratlösung (Beispiele 5 bis 8) eingeblendet. Die jeweiligen Proteinkonzentratlösungen sind in den Tabellen als Proteinkonzentrat bezeichnet. Bei den angegebenen Werten handelt es sich um Gew.-%-Angaben.

**Tabelle 1: Mandel Rezepturen ohne die Zugabe von funktionellen Zutaten**

| | **Belspiel 1** | **Belspiel 2** |
|---|---|---|
| Mandel Proteinkonzentrat (18% Protein, 1,9% NaCl) | 85 | - |
| Mandel Proteinkonzentrat (22% Protein, 1,6% NaCl) | - | 80 |
| Kokosfett | 15 | 20 |
| Total | 100 | 100 |
| Fett (absolut) | 15 | 20 |
| Fett i.T. | 43 | 48 |
| Protein (absolut) | 15,3 | 17,6 |
| Protein/Wasser | 18,9 | 23,2 |
| Salz (absolut) | 1,6 | 1,3 |

**Tabelle 2: Mandel Rezepturen mit funktionellen Zutaten**

| | **Belspiel 3** | **Belspiel 4** |
|---|---|---|
| Mandel Proteinkonzentrat (18% Protein, 1,9% NaCl) | 83,8 | - |
| Mandel Proteinkonzentral (22% Protein, 1,6% NaCl) | - | 78,8 |
| Kokosfett | 15 | 20 |
| farbgebende Zutaten | 0,2 | 0,2 |
| geschmacksgebende Zutaten | 1,0 | 1,0 |
| Konservierungsstoffe | - | - |
| Total | 100 | 100 |
| Fett (absolut) | 15 | 20 |
| Fett i.T. | 44 | 48 |
| Protein (absolut) | 15,1 | 17,3 |
| Protein/Wasser | 18,7 | 22,9 |
| Salz (absolut) | 1,6 | 1,3 |

**Tabelle3: Mung Bohnen Rezepturen ohne die Zugabe von funktionellen Zutaten**

| | **Belspiel 5** | **Belspiel 6** |
|---|---|---|
| Mung Bohnen Proteinkonzentrat (18% Protein, 1,7% NaCl) | 85 | - |
| Mung Bohnen Proteinkonzentrat (22% Protein, 1,4% NaCl) | - | 80 |
| Kokosfett | 15 | 20 |
| Total | 100 | 100 |
| Fett (absolut) | 15 | 20 |
| Fett i.T, | 46 | 50 |
| Protein (absolut) | 15,3 | 17,6 |
| Protein/Wasser | 18,5 | 22,6 |
| Salz (absolut) | 1,4 | 1,1 |

**Tabelle 4: Mung Bohnen Rezepturen mit funktionellen Zutaten**

| | **Beispiel 7** | **Beispiel 8** |
|---|---|---|
| Mung Bohnen Proteinkonzentrat (16% Protein, 1,7% NaCl) | 83,8 | - |
| Mung Bohnen Proteinkonzentrat (22% Protein, 1,4% NaCl) | - | 78,8 |
| Kokosfett | 15 | 20 |
| farbgebende Zutaten | 0,2 | 0,2 |
| geschmacksgebende Zutaten | 1,0 | 1.0 |
| Konservierungsstoffe | - | |
| Total | 100 | 100 |
| Fett (absolut) | 15 | 20 |
| Fett I.T. | 46 | 51 |
| Protein (absolut) | 15,1 | 17,3 |
| Prptein/Wasser | 18,2 | 22,2 |
| Salz (absolut) | 1,4 | 1,1 |

Um ein kontinuierliches Proteinnetzwerk zu erhalten, ist es unabdinglich, die Menge an nicht Proteinbestandteilen zu begrenzen, da diese Störgrößen in Bezug auf die kontinuierliche Phase darstellen. Hierbei ist der Gesamtproteingehalt und der Proteingehalt im Verhältnis zur Wasserphase wichtig.

**Tabelle 5: Grenzwerte Fett und Protein zum Erhalt kontinuierlicher Proteinphase**

| | **MIN** | **MAX** |
|---|---|---|
| Fett absolut/% | 0 | 30 |
| Fett i. TS/% | 0 | 65 |
| Protein absolut/% | 12 | 35* |
| Protein/Wasser/% | 16 | 38* |

Tabelle 5 zeigt die vorgenannten unterschiedlichen Grenzparameter, die in Weiterbildung der Erfindung von der Zusammensetzung zum Erhalten eines Proteinnetzwerkes mit gewünschten Eigenschaften, wie elastischen Eigenschaften und Festigkeitseigenschaften eingehalten werden sollten. Die Zugabe von Fett ist auf Null minimierbar, da diesem keine tragende Rolle zur Aggregation zukommt. Nach oben sollte der Fettanteil begrenzt werden, da ansonsten eine Störung der Proteinvernetzung möglich ist. Als untere Grenze zur Ausbildung eines hochelastischen Proteinnetzwerkes sollte ein Mindestgesamfproteingehalt von 12 Gew.-% und/oder ein Protein-/Wasserverhältnis von 16% eingehalten werden. Das Protein-/Wasserverhältnis bzw. der Protein-/Wassergehalt ist abhängig vom Fettgehalt. Wird dieser in der Rezeptur, d.h. der Zusammensetzung angehoben, sollte der Protein-/Wasserantell ebenfalls angehoben werden, wie sich beispielsweise aus den weiter unten eingeblendeten Beispiel 9 ergibt. Die angegebenen Maximalwerte für den Proteingehalt bzw. das Protein-/Wasserverhältnis sollten als Prozessgrenze bewertet werden, da höhere Proteingehalte zu hoch viskosen Massen führen, welche ein vergleichsweise schwieriges Handling bedingen.

In der im Folgenden eingeblendeten Tabelle 6 werden zwei definierte Grenzrezepturen am Beispiel einer Zusammensetzung auf Basis von einer Mandelproteinkonzentratlösung dargestellt:

**Tabelle 6: Grenzrezepturen am Beispiel Mandel**

| | **Beispiel 9** | **Beispiel 10** |
|---|---|---|
| Mandel Proteinkonzentrat (18% Protein, 1,9% NaCl) | 70 | - |
| Mandel Proteinkonzentrat (36% Protein, 1,7% NaCl) | - | 80 |
| Kokosfett | 30 | 20 |
| farbgebende Zutaten | - | - |
| geschmacksgebende Zutaten | - | - |
| Konservierungsstoffe | - | - |
| Total | 100 | 100 |
| Fett (absolut) | 30 | 20 |
| Fett I.T. | 65,0 | 38 |
| Protein (absolut) | 12,6 | 28 |
| Protein/Wasser | 18,9 | 37,9 |
| Salz (absolut) | 1,4 | 1,4 |

Beispiel 9 zeigt eine Rezeptur bzw. eine Zusammensetzung mit welcher trotz erhöhtem Fettgehalt und abgesenkten Proteingehalt sicher noch ein kontinuierliches Proteinnetzwerk gebildet werden kann. Wird der Proteingehalt weiter verringert, obwohl das Protein-/Wasserverhältnis gleich gehalten wird, so könnte dies dazu führen, dass sich die Proteine nicht mehr verknüpfen bzw. miteinander vernetzen/aggregieren, wodurch eine breiige nicht elastische Konsistenz erhalten werden kann. Wird das Protein-/Wasserverhältnis abgesenkt und der Gesamtproteingehalt bleibt gleich, kann dies ebenfalls nachteilig für die Ausbildung eines kontinuierlichen Proteingerüstes sein.

Beispiel 10 zeigt eine Maximalrezeptur bzw. -zusammensetzung mit einem doppelt so hohen Proteingehalt in der Wasserphase. Denkbar ist es, den Proteingehalt auch höher anzusetzen, um auch dann noch ein stabiles Proteinnetzwerk zu erhalten. Aufgrund der hiermit verbundenen, steigenden Viskosität wird das Handling der Zusammensetzung jedoch deutlich schwieriger.

In der im Folgenden eingeblendeten Tabelle 7 sind Grenzrezepturen am Beispiel einer Zusammensetzung auf Basis einer Mung Bohnen Proteinkonzentratlösung gezeigt.

**Tabelle 7: Grenzrezepturen am Belspiel Mung-Bohne**

| | **Beispiel 11** | **Beispiel 12** |
|---|---|---|
| Mung Bohnen Proteinkonzentrat (18% Protein, 1,9% NaCl) | 70 | - |
| Mung Bohnen Proteinkonzentrat (35% Protein, 1,7% NaCl) | - | 80 |
| Kokosfett | 30 | 20 |
| farbgebende Zutaten | - | - |
| geschmacksgebende Zutaten | - | - |
| Konservierungsstoffe | - | - |
| Total | 100 | 100 |
| Fett (absolut) | 30 | 20 |
| Fett i.T. | 67 | 40 |
| Protein (absolut) | 12,6 | 28 |
| Protein/Wasser | 18,5 | 36,2 |
| Salz (absolut) | 1,2 | 1,1 |

Beispiel 11 zeigt eine Zusammensetzung, mit welcher trotz erhöhtem Fettgehalt und abgesenktem Proteingehalt noch ein kontinuierliches Proteinnetzwerk gebildet werden kann. Wird der Proteingehalt weiter verringert, obwohl das Protein-/Wasserverhältnis gleichgehalten wird, könnte dies dazu führen, dass die Proteine nicht mehr (ausreichend) vernetzen, wodurch die Gefahr des Entstehens einer breiartigen, nicht elastischen Konsistenz steigt. Wird das Protein-/Wasserverhältnis abgesenkt und der Gesamtproteingehalt bleibt gleich, steigt ebenfalls die Gefahr, dass kein kontinuierliches Proteingerüst aufgebaut werden kann.

Beispiel 12 zeigt eine Maximalrezeptur bzw. -zusammensetzung mit einem doppelt so hohen Proteingehalt in der Wasserphase. Auch hier ist es denkbar, den Proteingehalt höher anzusetzen und dennoch ein stabiles Proteinnetzwerk zu erhalten. Aufgrund der steigenden Viskosität würde sich jedoch das Handling erschweren.

Die Erfindung führt auch auf einen, insbesondere durch Ausführung eines erfindungsgemäßen Verfahrens erhaltenen, bevorzugt veganen, stärke-und hydrokolloidfreien Lebensmittelgelkörper gemäß Anspruch 13, insbesondere in Form eines Lebensmittelgel-Blocks, dessen kontinuierliche wässrige Phase aus miteinander aggregierten, d.h. dreidimensional vernetzten Pflanzenproteinen, wobei sich der Lebensmittelgekörper durch einen Gewichtsprozentanteil an miteinander aggregierten Pflanzen-Proteinen aus einem Wertebereich zwischen 12 und 28 Gew.-% und einem Fettgehalt zwischen 0 und 30 Gew,-% auszeichnet. Der Lebensmittelgelkörper kann in Form eines Blocks, in Form von Scheiben, Stiften, Würfeln, Raspeln (Shreds), etc. bereitgestellt werden, insbesondere durch Zerkleinern eines als Verfahrensergebnis erhaltenen Lebensmittelgel-Blocks.

Besonders bevorzugt ist es, wenn der Lebensmittelgelkörper eine Festigkeit aus einem Wertebereich zwischen 15N und 40N, insbesondere zwischen 17N und 35N. Bevorzugt beträgt die Bruchfestigkeit eines erfindungsgemäßen Lebensmittelgelkörpers zwischen 20N und 70N, weiter bevorzugt zwischen 25N und 45N. Erfindungsgemäß beträgt die Elastizität eines erfindungsgemäßen Lebensmittelgelkörpers zwischen 85% und 100%, ganz besonders bevorzugt zwischen 90% und 95% beträgt. Bevorzugt beträgt die Biegefähigkeit eines erfindungsgemäßen Lebensmittelkörpers zwischen 80% und 100%, bevorzugt zwischen 85% und 98%. Die Biegefestigkeit eines nach dem Konzept der Erfindung ausgebildeten Lebensmittelgelkörpers beträgt bevorzugt zwischen 10mN und 1000mN, vorzugsweise zwischen 15mN und 400mN.

Die im Rahmen der vorliegenden Offenbarung diskutierten bzw. offenbarten Parameter Festigkeit, Elastizität und Bruchfestigkeit werden mittels eines sog. Texture-Analysers (Texturanalysegerät) ermittelt. Dabei kam konkret der Texture Analyser TA-XT plus, Stable Micro Systems zum Einsatz. Zur Messung der Festigkeit, der Bruchfestigkeit und der Elastizität wird eine abgewandelte Texturprofilanalyse angewandt, wobei die Proben folgendermaßen zu standardisieren sind: Kreiszylinderform mit einem Durchmesser von 47 mm und einer Höhe von 25 mm. Die Proben sind auf 16° Celsius zu temperieren.

Zur Ermittlung der Festigkeit und Elastizität ist eine doppelte Kompression der Probe durchzuführen, wobei aus folgender Tabelle 8 entnehmbarer Einstellungen am Texture-Analyser (Texturanalysegerät) vorzunehmen sind:

**Tabelle 8: Einstellungen**

| | |
|---|---|
| | Test Mode (Testmodus): Compression (Kompression) |
| | PreTest Speed (Vortestgeschwindigkeit):5mm/s |
| | Test Speed (Testgeschwindigkeit): 1mm/s |
| | PostTest Speed (Nachtestgeschwindigkeit): 5mm/s |
| | Target Mode (Vorgabe Modus): Distance (Weg) |
| | Distance (Weg): 5mm |
| | Trigger Type (Auslöseart): Auto (Force) (Kraft) |
| | Trigger Force (Auslösekraft): 1g |
| | Break Mode Abbrechmodus: Off (aus) |
| | Stop Plot At (Endposition): Start Position |
| | Tare Mode (Taramodus): Auto |
| | Advanced Options (erweiterte Optionen): Off (aus) |
| **Measuring cell** (Kraftzelle) | 5kg |
| Measuring pin (Messstempel) | ½" Cyl. Delrin P/0.5 |
| **Temperature** (Temperatur) | 16°C |

Die Kompression der Probe um 5 mm entspricht einer Verformung um 20% der Gesamthöhe. Nach der ersten Messung wird der Messstempel wieder zu seinem Ausgangspunkt zurückgefahren und die Probe für 15 s ruhen gelassen, wovor eine weitere Kompression stattfindet. Die Festigkeit entspricht der maximalen Kraft aus dem ersten Messzyklus. Die Elastizität berechnet sich aus dem Verhältnis der positiven Peakflächen beider Messungen in einem Diagramm, in dem die aufgewendete Kraft über die Zeit aufgetragen ist.

Bei der Bruchfestigkeit wird ermittelt, welche Kraft zur nicht reversiblen Deformation der Probe notwendig ist. Als Eindringtiefe ist hierbei 15 mm zu wählen. Das Peakmaximum einer Messkurve in einem Diagramm, bei dem die eingesetzte Kraft über die Zeit aufgetragen ist, entspricht der Bruchfestigkeit.

Die im Rahmen der vorliegenden Offenbarung diskutierten Parameter der Biegefähigkeit und Biegefestigkeit werden mit dem Texturanalysegerät: Texture Analyser TA-XTplus, Stable Micro Systems bestimmt.

**Tabelle 9 Einstellungen**

| | |
|---|---|
| **Test settings** | Test Mode (Testmodus): Compression |
| | PreTest Speed (Vortestgeschwindigkeit): 1mm/s |
| | Test Speed (Testgeschwindigkeit): 1mm/s |
| | PostTest Speed (Nachtestgeschw.): 5mm/s |
| | Target Mode (Vorgabemodus): Distance (Weg) |
| | Distance (Weg): 25mm |
| | Trigger Type (Auslöseart): Auto (Force) (Kraft) |
| | Trigger Force (Auslösekraft): 1g |
| | Break Mode (Abbrechmodus): Off (aus) |
| | Stop Plot At (Endposition): Start Position |
| | Tare Mode (Taramodus): Auto |
| | Advanced Options (erweiterte Optionen):Off (aus) |
| **Measuring cell** (Kraftzelle) | 5kg |
| **Measuring pin** (Messstempel) | SMS P/75 |
| **Temperature** (Temperatur) | 16°C |

Für den mittels des Texture-Analysers (Texturanalysegerät) durchzuführenden Biegetests werden die Proben folgendermaßen standardisiert:
Rechteckige Scheibe 35 x 30 mm mit einer Dicke (Materialstärke) von 2mm. Die Proben werden auf eine Temperatur von 16° Celsius temperiert.

Bei der Biegefähigkeit handelt es sich um den Prozentanteil der Strecke, um den die Probe (Scheibe) im Texturmessgerät zusammengedrückt werden kann, ohne zu brechen. Als Abstand zwischen der Bodenplatte und dem Messstempel werden dabei als Startposition 32 mm eingestellt, bevor die Probe der Höhe nach dazwischen geklemmt wird.

Ist die Scheibe nach vollständiger Kompression noch intakt, entspricht dies einer Biegefähigkeit von 100%. In diesem Fall Ist die maximale positive Kraft am Endpunkt des Abstandes erreicht. Bricht die Probe bevor die vollständige Kompression erreicht wurde, ist dies an einem abrupten Abfallen der aufgenommenen Kraft zu erkennen. Die Biegefestigkeit entspricht dabei der maximal gemessenen Kraft in mN. Die Biegefähigkeit wird in diesem Fall aus dem Verhältnis der Wegstrecke beim Bruch und der maximalen Wegstrecke berechnet.

Zur Durchführung des erfindungsgemäßen Verfahrens eignet sich ein Aggregator, der einen Druckbehälter zur Aufnahme der zu aggregierenden Zusammensetzung aufweist. Ferner umfasst der Aggregator Heiz- und Kühlmittel zum Aufheizen und Abkühlen der Zusammensetzung, wobei die Heiz- und Kühlmittel bevorzugt so ausgelegt sind, dass mit diesen die im Rahmen der Verfahrensoffenbarung angegebenen Prozessparameter, wie beispielsweise die Aufheiz- und Abkühlrate erfüllbar sind bzw. erfüllt werden. Wesentlich ist, dass dem Druckbehälter Gegendruckeinstellmittel zum Einstellen eines, zumindest zeitweise, d.h. zumindest bei Temperaturen der Zusammensetzung von zumindest partiell mindestens 100° Celsius, auf die Zusammensetzung einwirkenden, im Rahmen vorstehender Offenbarung erläuterten Gegendruckes zugeordnet sind. Die Gegendruckeinstellmittel können beispielsweise einen Druckgas-, insbesondere Druckluftanschluss umfassen, mit dem der Behälterinnenraum auf den im Rahmen der Verfahrensoffenbarung offenbarten Gegendruck bringbar ist. Wie im Rahmen der Verfahrensoffenbarung im Detail erläutert, sind die Gegendruckmittel jedoch nicht auf eine solche Druckgasausführung beschränkt - realisierbar sind im Rahmen der Erfindung auch alternative Gegendruckeinstellmittel, die den auf die Zusammensetzung wirkenden Gegendruck beispielsweise mechanisch oder hydraulisch und/oder durch Volumenveränderung des Druckbehälters erzeugen, etc.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in:
- Fig. 1: einen bevorzugten Herstellungsprozess zur Herstellung einer Proteinkonzentratlösung am Beispiel Mandel
- Fig. 2: Den Ablauf einer Aggregation einer Zusammensetzung auf Basis einer Mandelproteinkonzentratlösung,
- Fig. 3: ein typisches DSC-Diagramm einer Pflanzenproteinkonzentratlösung,
- Fig. 4: einen Herstellungsprozess zur Herstellung einer Zusammensetzung (Rezeptur) auf Basis eines Mandelproteinkonzentrats,
- Fig. 5: einen Herstellungsprozess zur Herstellung einer Zusammensetzung (Rezeptur) auf Basis einer Mungbohnenproteinkonzentratlösung,
- Fig. 6: ein Diagramm, aus dem die Festigkeit, die Bruchfestigkeit, die Elastizität und der Wassergehalt unterschiedlicher natürlicher Käse ersichtlich sind.
- Fig. 7: ein Diagramm, bei dem die Parameter gemäß Fig. 6 für Lebensmittelgelkörper auf Basis unterschiedlicher Pflanzenproteinkonzentrate gezeigt sind, wobei mit Lupine ein nicht zur Erfindung zählendes Produkt bezeichnet ist,
- Fig. 8: ein Diagramm, aus dem die Biegefähigkeit und Biegefestigkeit unterschiedlicher natürlicher Käse ersichtlich ist,
- Fig. 9: ein Diagramm, aus dem die Parameter gem. Fig. 8 für Lebensmittelgelkörper aufgetragen sind, die hergestellt sind auf Basis aus Zusammensetzungen auf Basis unterschiedlicher Pflanzenproteinkonzentratlösungen und
- Fig. 10: In einer schematischen Darstellung eine mögliche Ausführungsform eines Aggregators.

Die im Rahmen der Figurenbeschreibung offenbarten Angaben und Parameterwerte sollen die Erfindung nicht beschränken. Sie sollen jedoch als erfindungswesentlich und damit beanspruchbar offenbart gelten.

In den Figuren sind gleiche Elemente und Elemente mit den gleichen Bezugszeichen gekennzeichnet.

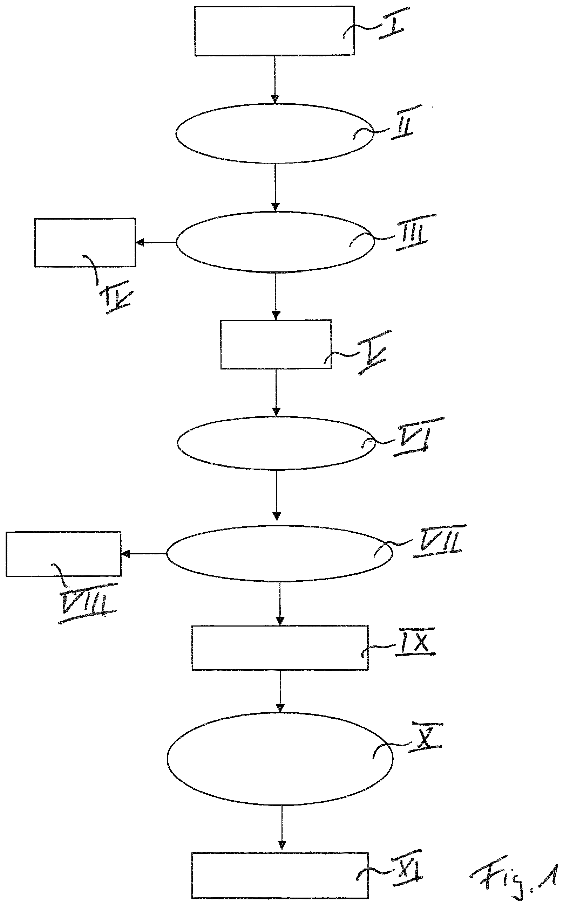

In Fig. 1 ist ein möglicher Herstellungsprozess einer Proteinkonzentratlösung am Beispiel Mandel gezeigt.

Bei I. wird Mandelmehl bereitgestellt, beispielsweise aufweisend 45 bis 55 Gew.-% Protein und 11 bis 16 Gew.-% Fett, wobei der Proteingehalt bevorzugt mindestens 50 Gew.-% beträgt und der Fettgehalt bevorzugt maximal 13 Gew.-%.

Bei II. erfolgt eine Extraktion des Pflanzenproteins in Wasser bei einer Verdünnung von 1:4, wobei der pH-Wert bevorzugt auf 5,8 bis 6,5 eingestellt wird. Besonders bevorzugt ist ein pH-Wert von 6,0. Die Extraktion erfolgt insbesondere bei einer Temperatur zwischen 15 und 25° Celsius, ganz besonders bevorzugt bei 20° Celsius, wobei die Extraktionszeit mindestens eine Stunde beträgt, vorzugsweise während eines Rührens, insbesondere mit einer Drehzahl zwischen 300 und 600 u/min, bevorzugt von 400 u/min.

Daraufhin erfolgt bei III. eine Zentrifugation und bei IV. wird ein Rückstand erhalten. Der Überstand ist mit V. bezeichnet. Die Zentrifugation bei III. wird bevorzugt für mindestens eine Stunde durchgeführt bei einer bevorzugten Temperatur zwischen 15 und 25° Celsius, ganz besonders bevorzugt von 20° Celsius. Die Zentrifugation erfolgt bevorzugt bei zwischen 14.000 und 27.000 g, ganz besonders bevorzugt bei 27.000 g.

Daraufhin erfolgt bei VI. eine saure Ausfällung des Proteins des Überstandes, insbesondere bei einem pH-Wert zwischen 4,8 und 5,2, ganz besonders bevorzugt von 5,2. Die Ausfällung wird bevorzugt über einen Zeitraum von mindestens 30 Minuten, ganz besonders bevorzugt von einer Stunde durchgeführt, insbesondere bei einer Temperatur aus einem Wertebereich zwischen 15 und 25° Celsius, insbesondere von 20° Celsius.

Daraufhin wird das ausgefällte Protein bei VII. zentrifugiert, insbesondere bei 14.000 bis 27.000 g, insbesondere bei 27.000 g, ganz besonders bevorzugt von mindestens 20 Minuten, noch weiter bevorzugt für 45 Minuten, insbesondere bei einer Temperatur zwischen 4 und 8° Celsius, ganz besonders bevorzugt bei 8° Celsius.

Bei VIII. wird ein Überstand erhalten. Bei dem Rückstand bei IX. handelt es sich um saures Proteinkonzentrat (Proteinpräzipitat) mit einem Proteingewichtsanteil zwischen 45 und 50%.

Bei X. erfolgt die Einstellung des pH-Wertes sowie der Protein und der NaCI-Konzentration. Bevorzugt wird der pH-Wert auf einen Wert auf einem Bereich zwischen 5,2 und 6,5, ganz besonders bevorzugt auf 5,4 eingestellt. Bevorzugt wird der Proteingehalt auf 16 bis 30 Gew.-%, besonders bevorzugt auf 18 bis 22% eingestellt und der NaCI-Gehalt auf 0 bis 3,3 Gew.-%, ganz besonders bevorzugt auf 1,6 bis1,9 Gew.-%. Als Prozessergebnis resultiert bei XI. ein für die Durchführung eines erfindungsgemäßen Verfahrens geeignete Proteinkonzentratlösung.

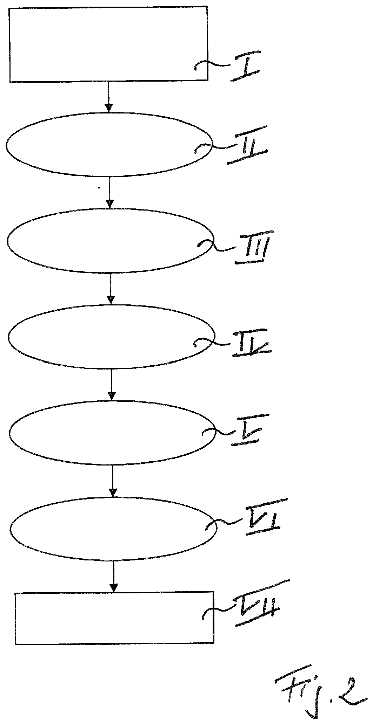

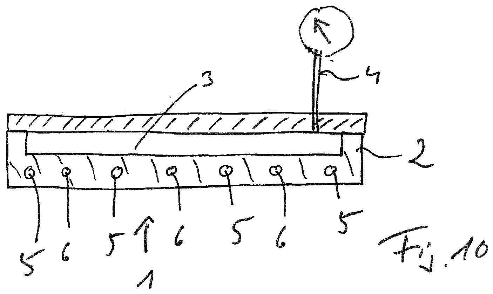

In Fig. 2 ist der Ablauf einer Aggregation einer Zusammensetzung zum Erhalten eines aggregierten Produktes, d.h. eines Lebensmittelgelköpers gezeigt. Hierzu kommt ein Aggregator 1 zum Einsatz, wie dieser beispielhaft in Fig. 10 gezeigt ist. Zu erkennen ist ein Druckbehälter 2, der für Überdruck ausgelegt ist. Der Druckbehälter 2 begrenzt ein Innenvolumen 3 (Behältervolumen) zur Aufnahme einer nach dem Konzept der Erfindung ausgebildeten Zusammensetzung. Der Druckbehälter 2 ist druckdicht verschließbar und mit Hilfe von Gegendruckeinstellmitteln 4 mit einem Gegendruck oberhalb des Atmosphärendrucks beaufschlagbar.

Dem Druckbehälter 2 sind zudem Heizmittel 5 und Kühlmittel 6 zugeordnet. Vorliegend sind die Heizmittel 5 beispielsweise als elektrische Heizpatronen in der Behälterwandung ausgeführt, während die Kühlmittel 6 Kühlkanäle umfassen, durch die ein Kühlmedium förderbar ist.

Bei I. wird eine Zusammensetzung in Form einer Emulsion auf Basis einer Mandelproteinkonzentratlösung bereitgestellt. Die Zusammensetzung umfasst beispielsweise zwischen 13 und 24 Gew.-% Protein, zwischen 0 und 2,8 Gew.-% NaCl, zwischen 0 und 1,8 Gew.-% Aroma, vorliegend Käsegeschmacksaromen und zwischen 10 und 30 Gew.-% Fett. Eine derartige Zusammensetzung wird bei II. in einem Aggregator gegeben und bei III.erfolgt die Einstellung eines Gegendrucks von beispielsweise mindestens 1,3 bar. Bei IV. erfolgt eine Aufheizphase, insbesondere mit einer Aufheizrate mit 6,5 und 8 K/min. auf eine Maximaltemperatur zwischen 108° Celsius und 120° Celsius. An die Aufheizphase schließt bei V. eine fakultative Heißhaltezeit bei Maximaltemperatur zwischen 0 und 10 min an, woraufhin bei VI. eine Abkühlphase erfolgt, insbesondere mit einer Kühlrate zwischen 7 und 8,5 K/min. Bei VII. wird ein erfindungsgemäßer Lebensmittelgelkörper erhalten.

In der folgenden Tabelle 10 sind bevorzugte Aggregationsbedingungen am Beispiel einer Mandelproteinkonzentratlösung eingeblendet:

**Tabelle 10: Aggregationsbedingungen am Belspiel Mandelproteinkonzentrat**

| | **MIN** | **MAX** | **OPTIMUM** |
|---|---|---|---|
| **Aufheizphase (K/min)** | 6,5 | 8,0 | 8,0 |
| **Haltezeit (min)** | 0 | 10 | 0 |
| **Abkühlphase (K/min)** | 7,0 | 8,5 | 8,5 |
| **Temperatur (°C)** | 108 | 120 | 113 |

Aus der folgenden Tabelle 11 sind bevorzugte minimale und maximale sowie optimale Maximaltemperaturen ersichtlich, auf die unterschiedlichen Zusammensetzungen auf Basis unterschiedlicher aus der Tabelle ersichtlicher Pflanzenproteinkonzentratlösungen im Aggregator im Rahmen der Aufheizphase erhitzt werden, wobei T-min eine bevorzugte minimal einzustellende Maximaltemperatur bezeichnet, T-max eine bevorzugte maximal zu wählende Maximaltemperatur und T-opt. eine optimal einzustellende Maximaltemperatur zur Aggregation.

**Tabelle 11: bevorzugte minimale, maximale und optimale Maximaltemperaturen für die Aggregation von Zusammensetzung auf Basis unterschiedlicher Pflanzenproteinkonzentratlösungen**

| | **Tₘᵢₙ(°C)** | **Tₘₐₓ(°C)** | **T_{opt.}(°C)** |
|---|---|---|---|
| **Mandel Protein** | 108 | 120 | 113 |
| **Mung Protein** | 95 | 108 | 100 |
| **Kokos Protein** | 108 | 120 | 113 |
| **Kichererbsen Protein** | 108 | 120 | 113 |
| **Hafer Protein** | 118 | 125 | 120 |
| **Erdnuss Protein** | 110 | 120 | 115 |

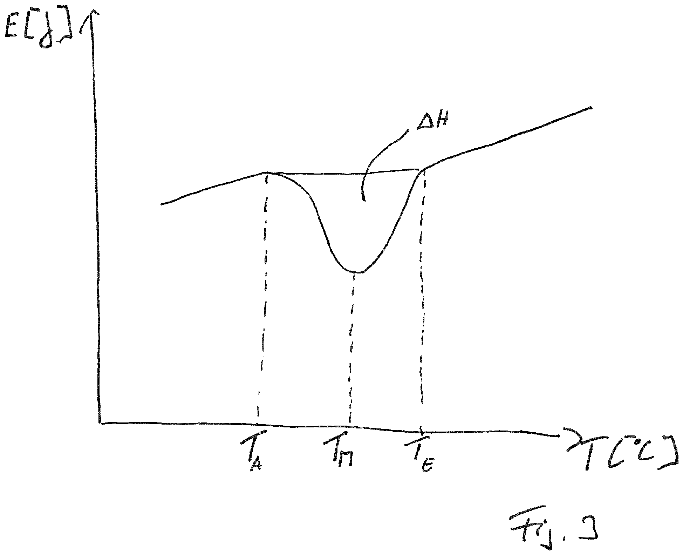

In Fig. 3 ist eine typische DSC-Kurve aus einer dynamischen Differenz-Kalorimetrie-Messung einer geeigneten Pflanzenproteinkonzentratlösung gezeigt. Zu erkennen ist, dass in dem Diagramm die spezifische, umgesetzte Wärmeenergie über die Temperatur aufgetragen ist. Die Kurve zeigt einen endothermen Peak, wobei die Peakfläche die Denaturierungsenthalpie ΔH der enthaltenen Proteine darstellt.

Der Peak erstreckt sich über eine Peaktemperaturspanne, die von einer Peakanfangstemperatur T_{A} bis zu einer Peakendtemperatur T_{E} reicht. Der Peak hat bei einer Peakmaximaltemperatur T_{M} ein Maximum. Die Maximaltemperatur, auf die eine Zusammensetzung zur Aggregation bevorzugt erhitzt wird, liegt bevorzugt im Bereich der Peakendtemperatur T_{E}, jedenfalls oberhalb der Peakmaximaltemperatur T_{M}.

Auf die separate Darstellung einer DSC-Kurve aus einer dynamischen Differenz-Kalorimetrie-Messung einer Zusammensetzung (Rezeptur) wurde verzichtet. Vorstehende Erläuterungen des endothermen Peaks sowie der zugehörigen Temperaturen gelten analog. Durch Zugabe von Zutaten, insbesondere von Salz, kann der endotherme Peak der DSC Kurve der Zusammensetzung verglichen mit dem endothermen Peak der DSC Kurve der zugehörigen Proteinkonzentratlösung auf der Temperaturachse verschoben sein, bei NaCl-Zugabe weiter nach rechts. Ebenso kann durch entsprechende Verdünnung der wässrigen Phase Proteinkonzentratlösung, insbesondere von deren NaCL-Gehalt im Zusammenhang mit der Herstellung der Zusammensetzung, beispielsweise durch Zugabe von Wasser der Peak weiter nach links, d.h. hin zu niedrigeren Temperaturen verschoben sein bzw. werden. Maßgeblich für die Wahl der Maximaltempertur zum Aggregieren der Zusammensetzung sind die Peaktemperaturen aus der DSC-Kurve der Zusammensetzung.

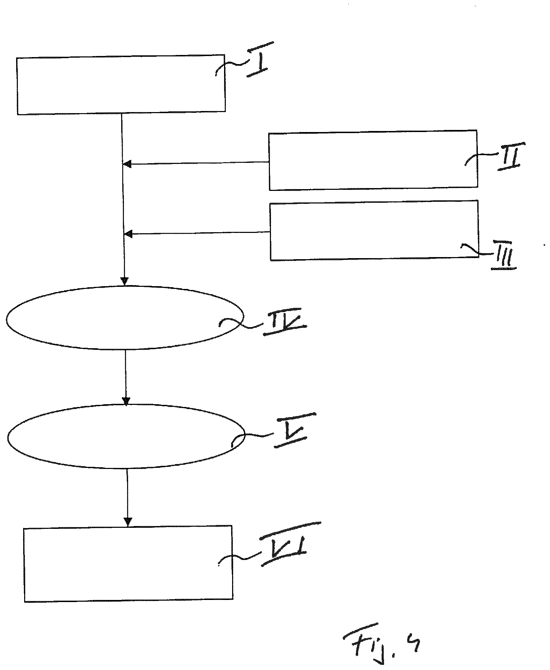

In Fig. 4 ist am Beispiel Mandel eine mögliche Herstellung einer Zusammensetzung gezeigt. Bei I. wird eine Proteinkonzentratlösung auf Mandelproteinbasis bereit gestellt. Diese zeichnet sich bevorzugt durch einen Proteingehalt zwischen 16 und 30 Gew.-%, insbesondere zwischen 18 und 22 Gew.-% aus, sowie durch einen NaCl-Gehalt zwischen 0 und 3,3 Gew.-%, bevorzugt zwischen 1,6 und 1,9 Gew.-%. Die Proteinkonzentratlösung zeichnet sich darüber hinaus bevorzugt durch einen pH-Wert zwischen 5,2 und 6,5, insbesondere von 5,4 aus.

Bei II. wird geschmolzenes Fett, insbesondere Kokosfett zugegeben, bevorzugt bei einer Temperatur zwischen 45 und 60° Celsius. Bei III. erfolgt die Zugabe von Aroma, beispielsweise zwischen 0 und 2 Gew.-%.

Bei IV. erfolgt ein Emulgierschritt, insbesondere für 1 bis 3 min bei bevorzugt 8.000 bis 20.000 u/min. Ganz besonders bevorzugt wird für 2 min bei einer Umdrehungszahl zwischen 15.000 und 20.000 U/min emulgiert.

Daraufhin erfolgt bei fünf ein Evakuierschritt zum Entziehen von Gasblasen und/oder der Zerstörung des während des Emulgierprozesses gebildeten Schaum, insbesondere für 2 bis 5 min, noch weiter bevorzugt für 3 min. Der Druck wird für die Evakuierung bevorzugt auf 100 bis 300 mbar, ganz besonders bevorzugt auf 150 m barreduziert - das Evakuieren erfolgt bevorzugt bei einer Temperatur zwischen 20 und 25° Celsius.

Als Ergebnis wird dann bei VI. eine Zusammensetzung in Form einer proteinbasierten Mandelemulsion erhalten, die sich bevorzugt auszeichnet durch einen Proteingewichtsanteil zwischen 13 und 24 Gew.-%, bevorzugt zwischen 15 und 17,5 Gew.-%, einen NaCl-Gehalt zwischen 0 und 2,8 Gew.-%, insbesondere zwischen 1,3 und 1,6 Gew.-%, einen Aromagehalt zwischen 0 und 1,8 Gew.-% und einen Fettgehalt zwischen 10 und 30 Gew.-%, insbesondere zwischen 15 und 20 Gew.-%.

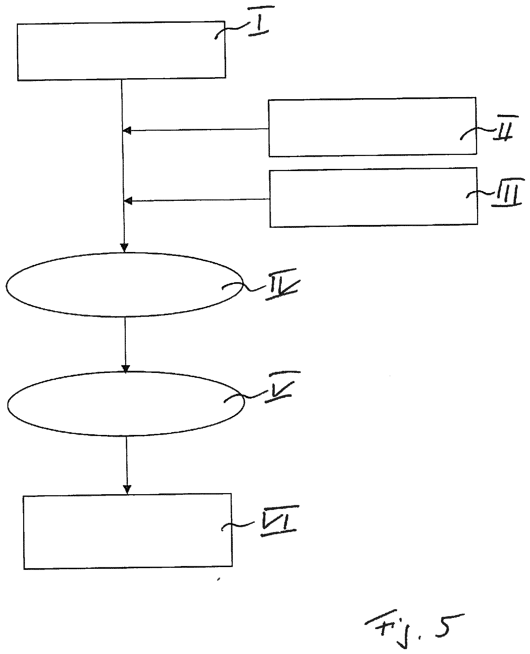

In Fig. 5 ist ein beispielhafter Herstellungsprozess einer Zusammensetzung auf Basis einer Mungbohnenproteinkonzentratlösung gezeigt. Diese wird bei I. bereit gestellt und zeichnet sich bevorzugt aus durch einen Proteingewichtsanteil zwischen 16 und 30 Gew.-%, insbesondere zwischen 18 und 22 Gew.-%, einen NaCl-Gehalt zwischen 0 und 3,3 Gew.-%, insbesondere zwischen 1,4 und 1,7 Gew.-% und einen pH-Wert zwischen 5,2 und 6,5, bevorzugt von 5,8.

Die Schritte II. bis V. sind dann identisch wie im Zusammenhang mit Fig. 4 erläutert. Als Verfahrensergebnis wird bei VI. eine Zusammensetzung in Form einer proteinbasierten Mungbohnenemulsion erhalten, wobei die bevorzugten Protein-, NaCl-, Aroma- und Fettgehalte denen aus dem Ausführungsbeispiel gemäß Fig. 4 entsprechen.

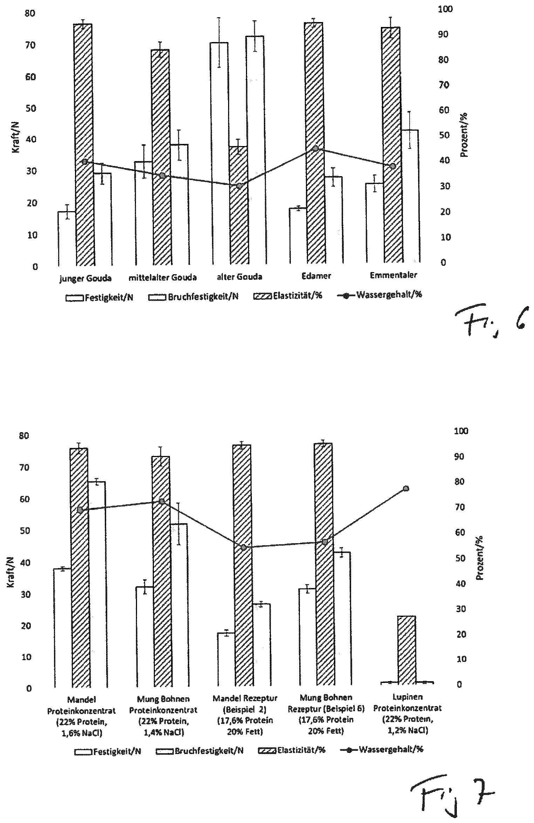

Aus Fig. 6 ist ersichtlich, dass die Charakterisierung der ausgewählten Standardprodukte (verschiedene Käsesorten) zeigt, dass die vier dargestellten Parameter Festigkeit, Bruchfestigkeit, Elastizität und Wassergehalt miteinander korrelieren.

Die Festigkeit und die Bruchfestigkeit steigt mit sinkendem Wassergehalt, gleichzeitig nimmt die Elastizität ab. Während der junge Gouda noch eine Elastizität von 95% aufweist, sinkt diese beim mittelalten und alten Gouda auf 85 bzw. 46%. Edamer und Emmentaler liegen beide im ähnlichen Bereich wie der junge Gouda, nämlich bei 95 und 93%. Die Festigkeit und Bruchfestigkeit liegt beim alten Gouda mit 70 bzw. 72N am höchsten, wobei der Wassergehalt mit 31Gew-% hier am geringsten ist. Der mittelalte Gouda hat eine nahezu halb so feste Struktur (Festigkeit: 32,7N; Bruchfestigkeit: 37,9N), wobei der Wassergehalt um nur 4,5Gew.-% höher liegt. Der Wassergehalt von Edamer und Gouda liegen mit 45 und 41% am höchsten, die Festigkeiten sind folglich am geringsten mit 17,6 und 17,2N, bzw. 27,3 und 29,1N Bruchfestigkeit. Der Emmentaler gliedert sich kurz hinter den beiden ein, mit einer Festigkeit von 25N und einer Bruchfestigkeit von knapp 42N.

Bei der Betrachtung der pflanzlichen Gele bzw. Lebensmittelgelkörper gemäß Fig. 7 stellt man fest, dass die Korrelation des Wassergehaltes nur bedingt zutrifft.

Der Wassergehalt der aggregierten Konzentrate liegt bei rund 70 bzw. 73Gew.-% für Mandel bzw. Mung Bohne. Bei den Rezepturen (siehe Beispiel 2 und Beispiel 6) sinkt dieser durch die Fettzugabe auf 55 bzw. 57Gew.-% (Mandel bzw. Mung Bohne). Die Festigkeiten und Bruchfestigkeiten, sowie die Elastizitäten können mit den konventionellen Sorten verglichen werden. Das Mandelgel ohne die Zugabe von Fett weist die höchste Festigkeit (38N) bzw. Bruchfestigkeit (65N) auf, und zeigt eine sehr hohe Elastizität (95%), welche mit einem jungen Gouda vergleichbar ist. Bei der Zugabe von Fett verringert sich die Festigkeit der Mandelrezeptur deutlich auf einen Wert von 17,2N, was ebenfalls mit einem jungen Gouda bzw. dem Edamer vergleichbar ist. Die Bruchfestigkeit liegt bei der Mandelprobe bei 26N, welche im Bereich des Edamers liegt. Die Elastizität bleibt nahezu identisch, um 95%. Die Mung Bohnen Probe ohne die Zugabe von Fett hat eine Festigkeit, die dem mittelalten Gouda gleichkommt (32N), bei einer etwas höheren Bruchfestigkeit von 52N. Die Elastizität liegt mit 91% knapp unter einer Emmentaler Probe. Die Mung Bohnen Rezeptur profitiert hinsichtlich der Elastizität von der Fettzugabe und erreicht hier einen Wert von fast 96%. Die Festigkeit sowie Bruchfestigkeit liegen bei 31 bzw. 42N. Das aggregierte Lupinen Proteinkonzentrat zeigt - wie bei den Oszillationsmessungen - deutlich schlechtere Werte in allen Bereichen.

Die Festigkeit und die Bruchfestigkeit liegt gleich auf, da die Probe bereits bei einer geringen Eindringtiefe bricht. Diese Werte liegen bei 0,9N. Die Elastizität der Probe ist mit 27,5% ebenfalls extrem gering. Zu erkennen ist daraus, dass das Aggregat aus einer Zusammensetzung auf Lupinenproteinkonzentratbasis nicht zur Erfindung gehört, sondern lediglich als Vergleichsansatz dient.

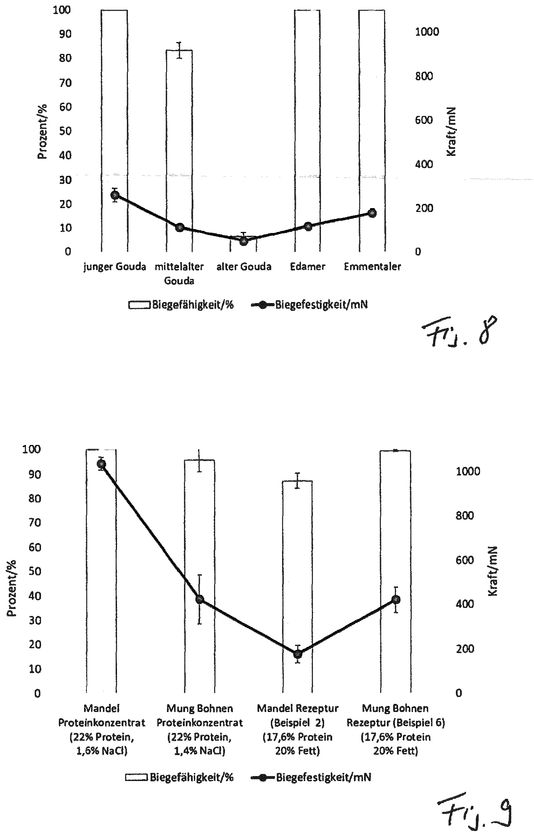

Wie sich aus Fig. 8 ergibt, können bei der Bestimmung der Biegefähigkeit und -festigkeit für die Käsestandards gut erkennbare Unterschiede festgestellt werden.

Die Scheiben junger Gouda, Edamer und Emmentaler sind nach einem vollständigen Kompressionszyklus noch intakt und haben daher eine Biegefähigkeit von 100%. Für eine vollständige Kompression des Edamers wird eine Kraft von ca. 125mN benötigt, wohingegen Emmentaler im Schnitt rund 50mN mehr Kraft benötigt. Die höchste Biegefestigkeit weist der junge Gouda auf. Hier liegt der Wert um 260mN. Die älteren und weniger elastischen Käsesorten mittelalter und alter Gouda können dem Biegetest nicht stand halten. Nach ca. 83% der Wegstrecke zerbricht der mittelalte Gouda. Die Biegefestigkeit (entspricht der Kraft bei Bruch) liegt dementsprechend niedriger, nämlich bei 115mN. Der alte Gouda weist eine extrem schlechte Biegefähigkeit auf. Er zerbricht bereits nach 6,5% der Wegstrecke, nach eine benötigten Kraft von knapp 52mN.

Im Vergleich zu den konventionellen Käseprodukten, gibt es viele Parallelen bei den pflanzlichen Produkten bzw. Lebensmittelgelkörpern gemäß Fig. 9.

Die Proben ohne Zusätze (22Gew.-% Protein, Mandel: 1,6Gew.-% NaCl, Mung. 1,4Gew.-% NaCl), weisen beide eine sehr hohe Biegefähigkeit auf. Die Mandelprobe zeigt hier ein analoges Verhalten zum jungen Gouda, Edamer und Emmentaler, mit 100%iger Biegefähigkeit. Die Biegefestigkeit ist vergleichsweise sehr hoch, mit 1037mN. Die Probe aus Mungproteinkonzentrat weist eine Blegefähigkeit von knapp 96% auf, bei einer Biegefestigkeit von 424mN. Beim Zusatz von 20Gew.-% Fett zum Mandelproteinkonzentrat (siehe Rezepturbeispiel 2) sinkt die Biegefähigkeit auf 87%, was einer Struktur zwischen einem jungen und einem mittelalten Gouda gleichkommt. Die Biegefestigkeit sinkt deutlich auf 176mN, was im Bereich des Emmentalers liegt. Bei Zugabe von Fett zum Mungproteinkonzentrat (siehe Rezepturbeispiel 6) steigt die Biegefähigkeit nochmals an, und erreicht nahezu 100%. Die Biegefestigkeit liegt hier mit 420mN wieder etwas höher, wie die konventionellen Käsesorten. Der Biegetest konnte bei dem Aggregat einer Zusammensetzung auf Lupinenproteinkonzentratlösungsbasis nicht durchgeführt werden, da kein schnittfestes Endprodukt bei der Aggregation gebildet wurde.

### Bezugszeichenliste

- 1.: Aggregator
- 2.: Druckbehälter
- 3.: Innenvolumen
- 4.: Gegendruckeinstellmittel
- 5.: Heizmittel
- 6.: Kühlmittel
- T_{A}: Peakanfangstemperatur
- T_{E}: Peakendtemperatur
- T_{M}: Peakmaximumtemperatur

## Patentansprüche

1. Verfahren zum Herstellen eines schnittfesten, insbesondere veganen, Lebensmittelgelkörpers, vorzugsweise Lebensmittel-Gelblocks, aus pflanzlichen Proteinen mit den Schritten:
a) Bereitstellen einer Zusammensetzung bestehend aus oder umfassend eine wässrige Pflanzenproteinkonzentratlösung mit, insbesondere eine vollständige Funktionalität aufweisenden, pflanzlichen Proteinen, wobei die Menge der Pflanzenproteinkonzentratlösung so gewählt wird, dass der Proteingewichtsanteil der Zusammensetzung zwischen 12 Gew.% und 28Gew.% beträgt, wobei die Zusammensetzung in einem Druckbehälter aufgeheizt und abgekühlt wird,
b) Durchführen des Aufheizens und Abkühlens bei einem auf die Zusammensetzung wirkenden, über Atmosphärennormaldruck liegenden Gegendruck in dem Druckbehälter (2), derart, dass ein Sieden der Zusammensetzung verhindert wird, wobei der Gegendruck zumindest dem Sattdampfdruck der Zusammensetzung bei einer jeweiligen Prozesstemperatur entspricht, und wobei das Abkühlen ohne Scherkrafteintrag, insbesondere ohne Rühren durchgeführt wird,
**dadurch gekennzeichnet,**
c) **dass** ein Gewichtsprozentanteil der pflanzlichen Proteine in der Pflanzenproteinkonzentratlösung aus einem Wertebereich zwischen 12 und 35 Gew.-% gewählt wird und dass die Pflanzenproteinkonzentratlösung einen pH-Wert aus einem Wertebereich zwischen 4,5 und 7,5 aufweist und dass ein NaCl-Gehalt der Pflanzenproteinkonzentratlösung zwischen 0 und 1,0 Mol/l gewählt wird und dass die Pflanzenproteinkonzentratlösung so beschaffen ist, dass diese In einer aus einer dynamischen Differenz-Kalorimetrie-Messung resultierenden, den Zusammenhang zwischen der spezifischen umgesetzten Wärmeenergie und der Temperatur beschreibenden DSC-Kurve einen endothermen Peak aufweist, der **gekennzeichnet ist durch** eine Peaktemperaturspanne, über die sich der Peak erstreckt, die begrenzt ist **durch** eine Peakanfangstemperatur und eine Peakendtemperatur und wobei das Speichermodul G' der Pflanzenproteinkonzentratlösung bei einer Oszillationsrheologie-messung beim Durchfahren der Peaktemperaturspanne von der Peakanfangstemperatur in Richtung der Peakendtemperatur um mindestens den Faktor 6, insbesondere 6 bis 12, bevorzugt 7 bis 12 ansteigt, wobei zur Durchführung der Differenz-Kalorimetrie-Messung 50 bis 100 mg des Pflanzenproteinkonzentrats mit dem bekanntem Proteingehalt in einem Stahlgefäß mit einem Volumen von 100µl eingewogen und druckdicht verschlossen werden, wobei ein weiteres Stahlgefäß mit Wasser gefüllt wird und bei der Messung als Referenz dient und wobei als Messsystem ein Mettler Toledo Typ DSC 1 Star zum Einsatz kommt und die Differenz-Kalorimetrie-Messung in der Durchführung eines Temperatur-Scans mit einer Aufheizrate von 2 K/min besteht und wobei zur Durchführung der Oszillationsrheologie die Pflanzenproteinkonzentratlösung in ein geeignetes Stahlgefäß (Becher: C25 DIN-System) eingefüllt wird und zwar zwischen 10 und 15 ml und wobei das Stahlgefäß druckdicht verschlossen wird und wobei die Messung der rheologischen Eigenschaften mittels des Zylinders (C25 DIN-System) erfolgt, der sich mit der Proteinkonzentratlösung in dem Stahlgefäß (Becher) befindet und wobei der Antrieb des Zylinders im Becher über eine Magnetkupplung erfolgt, so dass das System absolut druckdicht ist und wobei für die Messung das Messsystem Bohlin Gemini HR^{nano} Koaxialer Zylinder (C25 DIN3019) zum Einsatz kommt und das Messystem nur um einen kleinen Winkel oszilliert und wobei G' und G" gemessen werden und sich die beiden Anteile G' und G" beim nachfolgenden Temperaturprogramm verändern, wobei gestartet wird bei 25° Celsius und dann eine schnelle Erhitzung mit einer Aufheizrate zwischen 3 K/min und 5 K/min erfolgt bis auf die jeweilige PeakEndtemperatur aus der vorhergehenden Differenz-Kalorimetrie-Messung, wobei eine kurze Haltezeit zwischen 2 und 5 min bei dieser Temperatur eingehalten wird, so dass das Pflanzenproteinkonzentrat auch vollständig dieser Temperatur ausgesetzt wird und wobei danach schnell mit einer Abkühlrate zwischen 3 K/min und 5 K/min abgekühlt wird und, dass die mittels der dynamischen Differenez-Kalometrie-Messung bestimmbare Denaturierungsenthalpie der Proteine der Pflanzenproteinkonzentralösung mindestens 10J/g beträgt und
d) dass sich die Zusammensetzung **dadurch** auszeichnet, dass diese in einer aus einer dynamischen Differenz-Kalorimetrie-Messung resultierenden, den Zusammenhang zwischen der spezifischen umgesetzten Wärmeenergie und der Temperatur beschreibenden DSC-Kurve einen endothermen Peak aufweist, der **gekennzeichnet ist durch** eine Peaktemperaturspanne, über die sich der Peak erstreckt, die begrenzt ist **durch** eine Peakanfangstemperatur und eine Peakendtemperatur, wobei zur Durchführung der Differenz-Kalorimetrie-Messung der Zusammensetzung 50 bis 100 mg der Zusammensetzung mit in einem Stahlgefäß mit einem Volumen von 100µl eingewogen und druckdicht verschlossen werden und wobei ein weiteres Stahlgefäß mit Wasser gefüllt wird und bei der Messung als Referenz dient und wobei als Messsystem Mettler Toledo Typ DSC 1 Star zum Einsatz kommt und wobei die Differenz-Kalorimetrie-Messung in der Durchführung eines Temperatur-Scans mit einer Aufheizrate von 2 K/min besteht und
e) dass die Zusammensetzung in dem Druckbehälter (2) **durch** das Aufheizen der Zusammensetzung auf eine Maximaltemperatur, insbesondere zumindest partiell von mindestens 100°C und oberhalb der Peakanfangstemperatur des endothermen Peaks der Zusammensetzung, in einem Druckbehälter (2) und danach das Abkühlen der Zusammensetzung auf eine unterhalb von 100°C und unterhalb der Peakanfangstemperatur der Zusammensetzung liegende Kühltemperatur aggregiert wird und dass auf den Zusatz von Stärke und/oder Hydrokolloiden verzichtet wird, und
f) dass die Maximaltemperatur, auf die die Zusammensetzung aufgeheizt wird, aus einem Temperaturbereich zwischen der Peakmaximumtemperatur der Zusammensetzung und der Peakendtemperatur der Zusammensetzung zuzüglich 20% gewählt wird und dass die mittlere Aufheizrate, zumindest ab Erreichen der Peakanfangstemperatur der Zusammensetzung aus einem Wertebereich zwischen 4 K/min und 15 K/min gewählt wird.

2. Verfahren nach Anspruch 1,
**dadurch gekennzeichnet,**
**dass** die Pflanzenproteinkonzentratlösung einen pH-Wert aus einem Wertebereich zwischen 5,4 und 7,2 aufweist.

3. Verfahren nach einem der vorhergehenden Ansprüche,
**dadurch gekennzeichnet,**
**dass** die Pflanzenproteinkonzentratlösung so beschaffen ist, dass die mittels der dynamischen Differenz-Kalorimetrie-Messung bestimmbare Denaturierungsenthalpie der Proteine der Pflanzenproteinkonzentratlösung zwischen 10J/g und 30J/g beträgt.

4. Verfahren nach Anspruch einem der vorhergehenden Ansprüche,
**dadurch gekennzeichnet,**
**dass** der über Atmosphärennormaldruck liegende Gegendruck zumindest dem Sattdampfdruck der Zusammensetzung bei der jeweiligen Temperatur zusätzlich eines Sicherheitsaufschlags von mindestens 0,1 bar, bevorzugt von mindestens 0,25bar, weiter bevorzugt von mindestens 0,5 bar, weiter bevorzugt mindestens 1 bar entspricht.

5. Verfahren nach einem der vorhergehenden Ansprüche,
**dadurch gekennzeichnet,**
**dass** der Druckbehälter (2) vor und/oder während und/oder nach dem Aufheizen aktiv mit dem Gegendruck, insbesondere Druckgas, beaufschlagt wird und/oder dass der Gegendruck während des Abkühlens zumindest solange aufrechterhalten wird, bis die aggregierte Zusammensetzung vollständig unter 100°C abgekühlt ist.

6. Verfahren nach einem der vorhergehenden Ansprüche,
**dadurch gekennzeichnet,**
**dass** das Aufheizen ohne Scherkrafteintrag, insbesondere ohne Rühren durchgeführt wird.

7. Verfahren nach einem der vorhergehenden Ansprüche,
**dadurch gekennzeichnet,**
**dass** die Zusammensetzung vor dem Abkühlen über eine Zeitspanne zwischen 0,5 bis 10 min, bevorzugt zwischen 0,2 bis 1 min bei einer zwischen der Peakmaximumtemperatur der Zusammensetzung und der Maximaltemperatur liegenden Heißhaltetemperatur, bevorzugt bei der Maximaltemperatur, heißgehalten wird.

8. Verfahren nach einem der vorhergehenden Ansprüche,
**dadurch gekennzeichnet,**
**dass** die mittlere Abkühlrate, zumindest bis zum Erreichen der Peakanfangstemperatur der Zusammensetzung, mindestens 4K/min, bevorzugt mindestens 8K/min beträgt und/oder aus einem Wertebereich zwischen 4K/min und 15K/min, weiter bevorzugt zwischen 8K/min und 15K/min, gewählt wird.

9. Verfahren nach einem der vorhergehenden Ansprüche,
**dadurch gekennzeichnet,**
**dass** die Pflanzenproteine des Pflanzenproteinkonzentrats extrahiert sind aus einem oder mehreren pflanzlichen Rohstoffen ausgewählt aus der Gruppe: Mandel, Mungbohne, Kokosnuss, Kichererbse, Erdnuss, Cashew, Hafer, Erbse, Bohne, Reis, Weizenkleber, Linsen, Amaranth, Bohnen, weiße Bohnen, Kidney Bohnen, Fava Bohnen, Sojabohnen, Getreide.

10. Verfahren nach einem der vorhergehenden Ansprüche,
**dadurch gekennzeichnet,**
**dass** der Fettgehalt der Zusammensetzung auf einen Wert aus einem Wertebereich zwischen 0 Gew.% und 30 Gew.%, insbesondere zwischen 1 Gew.% und 30 Gew.-%, bevorzugt zwischen 10 Gew.-% und 20 Gew.-% und/oder dass der Zuckergehalt der Zusammensetzung durch Zugabe von Zucker, insbesondere Saccharose, auf einen Wert aus einem Wertebereich zwischen 0 Gew.% und 60 Gew.%, insbesondere zwischen 5 Gew.% und 50 Gew.%, bevorzugt zwischen 10 Gew.% und 35 Gew.% und/oder dass der NaCl-Gehalt der Zusammensetzung auf einen Wert aus einem Bereich zwischen 1,1 und 1,6 Gew.-% eingestellt wird.

11. Verfahren nach einem der vorhergehenden Ansprüche,
**dadurch gekennzeichnet,**
**dass** die Zusammensetzung mindestens eine funktionale Zutat aus der Gruppe an Zutaten umfasst: farbgebende Substanz, Aroma, insbesondere Käsegeschmacksaroma, Konservierungsmittel, geschmacksgebende Zutat.

12. Verfahren nach einem der vorhergehenden Ansprüche,
**dadurch gekennzeichnet,**
**dass** die Zutaten der Zusammensetzung emulgiert werden und dass der Emulsion unter Unterdruckatmosphäre Gasblasen entzogen und/oder bei der Emulsion gebildeter Schaum entfernt werden/wird.

13. Schnittfester, stärkefreier und hydrokolloidfreier, insbesondere veganer, elastischer Lebensmittelgelkörper, insbesondere Lebensmittel-Gelblock, erhalten durch ein Verfahren nach einem der vorhergehenden Ansprüche mit einer kontinuierlichen wässrigen Phase aus miteinander aggregierten Pflanzenproteinen und einem Gewichtsprozentanteil an den miteinander aggregierten Pflanzenproteinen aus einem Wertebereich zwischen 12 und 28 Gew.-%,wobei ein Fettgehalt des Gelblocks zwischen 0 und 30 Gew.-%,insbesondere zwischen 1 Gew.% und 30 Gew.-%, bevorzugt zwischen 10 Gew.-% und 20 Gew.-% beträgt und wobei die mittels eines Texturanalysegerätes entsprechend wie in der Beschreibung beschrieben zu bestimmende Elastizität eines erfindungsgemässen Lebensmittelgelkörpers zwischen 85% und 100% beträgt.

## Claims

1. A method for producing a firm, in particular vegan, gel food body, preferably a gel food block, made of plant proteins, the method having the following steps:
a) providing a composition consisting of or comprising an aqueous plant protein concentrate solution with plant proteins having, in particular, a complete functionality, wherein the amount of the plant protein concentrate solution is selected such that the protein content, in percentage by weight, of the composition is between 12 % by weight and 28 % by weight, wherein the composition is heated and cooled in a pressure vessel,
b) performing the heating and cooling at a counterpressure in the pressure vessel (2), which counterpressure acts on the composition and is above normal atmospheric pressure, in such a way that the composition is prevented from boiling, wherein the counterpressure corresponds at least to the saturated vapor pressure of the composition at a relevant process temperature, and wherein the cooling is performed without introduction of shear force, in particular without stirring,
**characterized in that**
c) a content, in percentage by weight, of the plant proteins in the plant protein concentrate solution is selected from a value range between 12 and 35 % by weight, and **in that** the plant protein concentrate solution has a pH value from a value range between 4.5 and 7.5, and **in that** an NaCl content of the plant protein concentrate solution is selected between 0 and 1.0 mol/l, and **in that** the plant protein concentrate solution is such that it has an endothermic peak in a DSC curve resulting from a dynamic differential calorimetry measurement and describing the relationship between the specific converted heat energy and the temperature, which peak is **characterized by** a peak temperature range over which the peak extends, delimited by a peak start temperature and a peak end temperature, and wherein the storage modulus G' of the plant protein concentrate solution increases by at least a factor of 6, in particular 6 to 12, preferably 7 to 12, when passing through the peak temperature range from the peak start temperature in the direction of the peak end temperature in an oscillation rheology measurement, wherein, to carry out the differential calorimetry measurement, 50 to 100 mg of the plant protein concentrate with the known protein content are weighed into a steel vessel with a volume of 100 µl and closed pressure-tight, wherein a further steel vessel is filled with water and serves as a reference for the measurement, and wherein a Mettler Toledo type DSC 1 Star is used as measuring system and the differential calorimetry measurement consists of performing a temperature scan with a heating rate of 2 K/min, and wherein, to carry out the oscillation rheology, the plant protein concentrate solution is filled into a suitable steel vessel (beaker: C25 DIN system), specifically between 10 and 15 ml, and wherein the steel vessel is closed pressure-tight, and wherein the rheological properties are measured by means of the cylinder (C25 DIN system), which is located in the steel vessel (beaker) with the protein concentrate solution, and wherein the cylinder in the beaker is driven by a magnetic coupling so that the system is absolutely pressure-tight, wherein the Bohlin Gemini HR^{nano} coaxial cylinder (C25 DIN3019) measuring system is used for the measurement and the measuring system preferably oscillates only through a small angle and wherein G' and G" are measured and the two portions G' and G" change with the subsequent temperature program, wherein the starting temperature is 25° Celsius and then a rapid heating with a heating rate between 3 K/min and 5 K/min takes place up to the relevant peak end temperature from the previous differential calorimetry measurement, wherein a short holding time between 2 and 5 min is observed at this temperature so that the plant protein concentrate is also completely exposed to this temperature, and wherein thereafter cooling is performed rapidly at a cooling rate between 3 K/min and 5 K/min, and in that the denaturation enthalpy of the proteins of the plant protein concentrate solution which can be determined by means of the dynamic differential calorimetry measurement is at least 10 J/g, and
d) in that the composition is **characterized in that** it has an endothermic peak in a DSC curve resulting from a dynamic differential calorimetry measurement and describing the relationship between the specific converted heat energy and the temperature, which peak is **characterized by** a peak temperature range over which the peak extends, which is delimited by a peak start temperature and a peak end temperature, wherein, to carry out the differential calorimetry measurement of the composition, 50 to 100 mg of the composition are weighed into a steel vessel with a volume of 100 µl and closed pressure-tight, and wherein a further steel vessel is filled with water and serves as a reference during the measurement, and wherein a Mettler Toledo Type DSC 1 Star is used as measuring system and wherein the differential calorimetry measurement consists of performing a temperature scan with a heating rate of 2 K/min, and
e) in that the composition is aggregated in the pressure vessel (2) by heating the composition to a maximum temperature, in particular at least partially of at least 100°C and above the peak start temperature of the endothermic peak of the composition, in a pressure vessel (2) and then cooling the composition to a cool temperature lying below 100°C and below the peak start temperature of the composition, and that the addition of starch and/or hydrocolloids is omitted, and
f) in that the maximum temperature to which the composition is heated is selected from a temperature range between the peak maximum temperature of the composition and the peak end temperature of the composition plus 20%, and in that the average heating rate, at least from reaching the peak start temperature of the composition, is selected from a value range between 4 K/min and 15 K/min.

2. The method according to claim 1,
**characterized in that**
the plant protein concentrate solution has a pH value from a value range between 5.4 and 7.2.

3. The method according to one of the preceding claims,
**characterized in that**
the plant protein concentrate solution is such that the denaturation enthalpy of the proteins of the plant protein concentrate solution, which can be determined by means of the dynamic differential calorimetry measurement, is between 10 J/g and 30 J/g.

4. The method according to one of the preceding claims,
**characterized in that**
the counterpressure above normal atmospheric pressure corresponds at least to the saturated vapor pressure of the composition at the relevant temperature in addition to a safety margin of at least 0.1 bar, preferably at least 0.25 bar, more preferably at least 0.5 bar, more preferably at least 1 bar.

5. The method according to one of the preceding claims,
**characterized in that**
the pressure vessel (2) is actively subjected to the counterpressure, in particular compressed gas, before and/or during and/or after heating, and/or in that the counterpressure is maintained during cooling at least until the aggregated composition has cooled completely below 100°C.

6. The method according to one of the preceding claims,
**characterized in that**
the heating is carried out without introduction of shear force, in particular without stirring.

7. The method according to one of the preceding claims,
**characterized in that**
the composition is kept hot prior to cooling for a period of time between 0.5 to 10 min, preferably between 0.2 min to 1 min, at a heat-holding temperature lying between the peak maximum temperature of the composition and the maximum temperature, preferably is kept hot at the maximum temperature.

8. The method according to one of the preceding claims,
**characterized in that**
the average cooling rate, at least until reaching the peak start temperature of the composition, is at least 4 K/min, preferably at least 8 K/min, and/or is selected from a value range between 4 K/min and 15 K/min, more preferably between 8 K/min and 15 K/min.

9. The method according to one of the preceding claims,
**characterized in that**
the plant proteins of the plant protein concentrate are extracted from one or more plant raw materials selected from the group: almond, mung bean, coconut, chickpea, peanut, cashew, oat, pea, bean, rice, wheat gluten, lentils, amaranth, beans, white beans, kidney beans, fava beans, soy beans, cereals.

10. The method according to one of the preceding claims,
**characterized in that**
the fat content of the composition is adjusted to a value from a value range between 0 % by weight and 30 % by weight, in particular between 1 % by weight and 30 % by weight, preferably between 10 % by weight and 20 % by weight, and/or **in that** the sugar content of the composition is adjusted by adding sugar, in particular sucrose, to a value from a value range between 0 % by weight and 60 % by weight, in particular between 5 % by weight and 50% by weight, preferably between 10% by weight and 35% by weight, and/or **in that** the NaCl content of the composition is adjusted to a value from a range between 1.1 and 1.6 % by weight.

11. The method according to one of the preceding claims,
**characterized in that**
the composition comprises at least one functional ingredient from the group of ingredients: coloring substance, flavoring, in particular cheese flavoring, preservative, flavor-enhancing ingredient.

12. The method according to one of the preceding claims,
**characterized in that**
the ingredients of the composition are emulsified, and **in that** gas bubbles are removed from the emulsion under a negative pressure atmosphere and/or foam formed in the emulsion is removed.

13. A firm, in particular vegan, elastic gel food body, in particular a gel food block, which is free from starch, free from hydrocolloids and is obtained by a method according to one of the preceding claims, comprising a continuous aqueous phase of mutually aggregated plant proteins and having a content, in percentage by weight, of the mutually aggregated plant proteins from a value range between 12 and 28 % by weight, wherein a fat content of the gel block is between 0 and 30 % by weight, in particular between 1 % by weight and 30 % by weight, preferably between 10 % by weight and 20 % by weight, and wherein the elasticity of a gel food body according to the invention to be determined according to the description by means of a texture analyzer is between 85% and 100%.

## Revendications

1. Procédé de fabrication d'un corps de gel de produit alimentaire, de préférence un bloc de gel de produit alimentaire, ferme, notamment végétalien, à partir de protéines végétales, le procédé comprenant les étapes consistant à :
a) fournir une composition composée de ou comprenant une solution de concentré de protéines végétales aqueuse avec des protéines végétales ayant notamment une fonctionnalité complète, la quantité de la solution de concentré de protéines végétales étant choisie de telle manière que la proportion en poids de protéines de la composition est entre 12 % en poids est 28 % en poids, la composition étant chauffée et refroidie dans un récipient à pression,
b) effectuer le chauffage et le refroidissement à une contre-pression qui agit sur la composition et qui est supérieure à la pression atmosphérique normale dans le récipient à pression (2) de telle manière qu'une ébullition de la composition est évitée, la contre-pression correspondant au moins à la pression de vapeur saturée de la composition à une température de processus respective, et le refroidissement étant effectué sans application de force de cisaillement, notamment sans agitation,
**caractérisé en ce**
c) **qu'**un pourcentage en poids des protéines végétales dans la solution de concentré de protéines végétales est choisi d'une plage de valeurs entre 12 % en poids et 35 % en poids et que la solution de concentré de protéines végétales a un pH d'une plage de valeurs entre 4,5 et 7,5 et qu'une teneur en NaCl de la solution de concentré de protéines végétales est choisie entre 0 mol/l et 1,0 mol/l et que la solution de concentré de protéines végétales est d'une nature telle que cette solution de concentré de protéines végétales a un pic endothermique dans une courbe DSC qui résulte d'une mesure de calorimétrie différentielle à balayage dynamique et qui décrit la relation entre l'énergie thermique transformée spécifique et la température, le pic endothermique étant **caractérisé par** une plage de température de pic sur laquelle le pic s'étend et qui est limitée par une température initiale de pic et une température finale de pic et dans lequel le module de stockage G' de la solution de concentré de protéines végétales augmente au moins d'un facteur de 6, notamment de 6 à 12, de préférence de 7 à 12, quand la plage de température de pic est traversée de la température initiale de pic vers la température finale de pic dans une mesure de rhéologie d'oscillation, dans lequel, afin d'effectuer la mesure de calorimétrie différentielle à balayage, 50 mg à 100 mg du concentré de protéines végétales qui a la teneur en protéines connue sont pesés dans un récipient en acier ayant un volume de 100 µl et sont fermés de façon à être étanche sous pression, dans lequel un autre récipient en acier est rempli d'eau et sert de référence dans la mesure et dans lequel un Mettler Toledo type DSC 1 Star est utilisé comme système de mesure et la mesure de calorimétrie différentielle à balayage consiste à exécuter un balayage de température à un taux de chauffage de 2 K/min et dans lequel, afin d'effectuer la rhéologie d'oscillation, la solution de concentré de protéines végétales est introduite dans un récipient en acier approprié (gobelet : système C25 DIN), à savoir entre 10 ml et 15 ml, et dans lequel le récipient en acier est fermé de façon à être étanche sous pression et dans lequel la mesure des propriétés rhéologiques est effectuée au moyen du cylindre (système C25 DIN) qui est situé dans le récipient en acier (gobelet) avec la solution de concentré de protéines végétales et dans lequel l'entraînement du cylindre dans le gobelet est effectué par un accouplement magnétique, de sorte que le système est absolument étanche sous pression, et dans lequel le système de mesure Bohlin Gemini HR^{nano} cylindre coaxial (C25 DIN3019) est utilisé pour la mesure et le système de mesure n'oscille que d'un petit angle et dans lequel G' et G" sont mesurés et les deux proportions G' et G" changent dans le programme de température suivant, dans lequel le programme de température commence à 25 °C et un chauffage rapide à un taux de chauffage entre 3 K/min et 5 K/min est ensuite effectué jusqu'à la température finale de pic respective de la mesure de calorimétrie différentielle à balayage précédente, dans lequel un court temps de maintien entre 2 min et 5 min s'écoule à cette température, de sorte que le concentré de protéines végétales est entièrement exposé à cette température, et dans lequel ledit concentré de protéines végétales est ensuite refroidi rapidement à un taux de refroidissement entre 3 K/min et 5 K/min et que l'enthalpie de dénaturation des protéines de la solution de concentré de protéines végétales qui peut être déterminée au moyen de la mesure de calorimétrie différentielle à balayage dynamique est au moins 10 J/g et
d) que la composition est **caractérisée en ce que** cette composition a un pic endothermique dans une courbe DSC qui résulte d'une mesure de calorimétrie différentielle à balayage dynamique et qui décrit la relation entre l'énergie thermique transformée spécifique et la température, le pic endothermique étant **caractérisé par** une plage de température de pic sur laquelle le pic s'étend et qui est limitée par une température initiale de pic et une température finale de pic, dans lequel, afin d'effectuer la mesure de calorimétrie différentielle à balayage de la composition, 50 mg à 100 mg de la composition sont pesés dans un récipient en acier ayant un volume de 100 µl et sont fermés de façon à être étanche sous pression et dans lequel un autre récipient en acier est rempli d'eau et sert de référence dans la mesure et dans lequel un Mettler Toledo type DSC 1 Star est utilisé comme système de mesure et dans lequel la mesure de calorimétrie différentielle à balayage consiste à exécuter un balayage de température à un taux de chauffage de 2 K/min et
e) que la composition dans le récipient à pression (2) est agrégée par le chauffage de la composition à une température maximale, notamment au moins partiellement d'au moins 100 °C et supérieure à la température initiale du pic endothermique de la composition, dans un récipient à pression (2) et, ensuite, le refroidissement de la composition à une température de refroidissement qui est inférieure à 100 °C et inférieure à la température initiale de pic de la composition et qu'aucun amidon et/ou aucun hydrocolloïde n'est pas ajouté, et
f) que la température maximale à laquelle la composition est chauffée est choisie d'une plage de température entre la température maximale de pic de la composition et la température finale de pic de la composition, plus 20 %, et que le taux de chauffage moyen est choisi d'une plage de valeurs entre 4 K/min et 15 K/min, au moins lorsque la température initiale de pic de la composition est atteinte.

2. Procédé selon la revendication 1,
**caractérisé en ce que**
la solution de concentré de protéines végétales a un pH d'une plage de valeurs entre 5,4 et 7,2.

3. Procédé selon l'une quelconque des revendications précédentes,
**caractérisé en ce que**
la solution de concentré de protéines végétales est d'un nature telle que l'enthalpie de dénaturation des protéines de la solution de concentré de protéines végétales qui peut être déterminée au moyen de la mesure de calorimétrie différentielle à balayage dynamique est entre 10 J/g et 30 J/g.

4. Procédé selon l'une quelconque des revendications précédentes,
**caractérisé en ce que**
la contre-pression qui est supérieure à la pression atmosphérique normale correspond au moins à la pression de vapeur saturée de la composition à une température respective, plus une augmentation de sécurité d'au moins 0,1 bar, de préférence d'au moins 0,25 bar, plus préférentiellement d'au moins 0,5 bar, plus préférentiellement d'au moins 1 bar.

5. Procédé selon l'une quelconque des revendications précédentes,
**caractérisé en ce que**
la contre-pression, notamment du gaz comprimé, est activement appliqué au récipient à pression (2) avant et/ou pendant et/ou après le chauffage et/ou que la contre-pression est maintenue pendant le refroidissement, au moins jusqu'à ce que la composition agrégée soit complètement refroidie au-dessous de 100 °C.

6. Procédé selon l'une quelconque des revendications précédentes,
**caractérisé en ce que**
le chauffage est effectué sans application de force de cisaillement, notamment sans agitation.

7. Procédé selon l'une quelconque des revendications précédentes,
**caractérisé en ce**
**qu'**avant le refroidissement, la composition est maintenue chaude pendant une durée entre 0,5 min à 10 min, de préférence entre 0,2 min à 1 min à une température de maintien au chaud qui est entre la température maximale de pic de la composition et la température maximale, de préférence à la température maximale.

8. Procédé selon l'une quelconque des revendications précédentes,
**caractérisé en ce que**
le taux de chauffage moyen, au moins jusqu'à ce que la température initiale de pic de la composition soit atteinte, est au moins 4 K/min, de préférence au moins 8 K/min et/ou est choisi d'une plage de valeurs entre 4 K/min et 15 K/min, de préférence entre 8 K/min et 15 K/min.

9. Procédé selon l'une quelconque des revendications précédentes,
**caractérisé en ce que**
les protéines végétales du concentré de protéines végétales sont extraites d'une ou plusieurs matières premières végétales choisie(s) dans le groupe : amande, haricot mungo, noix de coco, pois chiche, arachide, cajou, avoine, pois, haricot, riz, gluten de froment, lentilles, amarante, haricots, haricots blancs, haricots communs, vicia faba, haricots de soja, céréales.

10. Procédé selon l'une quelconque des revendications précédentes,
**caractérisé en ce que**
la teneur en graisse de la composition est réglée à une valeur d'une plage de valeurs entre 0 % en poids et 30 % en poids, notamment entre 1 % en poids et 30 % en poids, de préférence entre 10 % en poids et 20 % en poids et/ou que la teneur en sucre de la composition est réglée à une valeur d'une plage de valeurs entre 0 % en poids et 60 % en poids, notamment entre 5 % en poids et 50 % en poids, de préférence entre 10 % en poids et 35 % en poids, par l'ajout de sucre, notamment de saccharose, et/ou que le teneur en NaCl de la composition est réglée à une valeur d'une plage entre 1,1 % en poids et 1,6 % en poids.

11. Procédé selon l'une quelconque des revendications précédentes,
**caractérisé en ce que**
la composition comprend au moins un ingrédient fonctionnel du groupe d'ingrédients : substance colorante, arôme, notamment arôme de fromage, conservateur, ingrédient aromatisant.

12. Procédé selon l'une quelconque des revendications précédentes,
**caractérisé en ce que**
les ingrédients de la composition sont émulsionnés et que des bulles de gaz sont extraites de l'émulsion dans une atmosphère sous vide et/ou que de mousse formée dans l'émulsion est enlevée.

13. Corps de gel de produit alimentaire ferme, sans amidon et hydrocolloïdes, notamment végétalien, élastique, notamment un bloc de gel de produit alimentaire, obtenu par un procédé selon l'une quelconque des revendications précédentes et ayant une phase aqueuse continue de protéines végétales agrégées l'une avec l'autre et un pourcentage en poids des protéines végétales agrégées l'une avec l'autre d'une plage de valeurs entre 12 % en poids et 28 % en poids, une teneur en graisse du bloc de gel étant entre 0 % en poids et 30 % en poids, notamment entre 1 % en poids et 30% en poids, de préférence entre 10% en poids et 20% en poids et l'élasticité d'un corps de gel de produit alimentaire selon la revendication à déterminer au moyen d'un appareil d'analyse de texture selon la description étant entre 85 % et 100 %.
